(19) **Europäisches Patentamt / European Patent Office / Office européen des brevets**

(11) **EP 4 723 540 A1**

(12) # EUROPEAN PATENT APPLICATION

(43) Date of publication:
08.04.2026 Bulletin 2026/15

(21) Application number: 24315451.5

(22) Date of filing: 02.10.2024

(51) International Patent Classification (IPC):
H04L 9/00 (2022.01)    H04L 9/30 (2006.01)

(52) Cooperative Patent Classification (CPC):
H04L 9/008; H04L 9/3093

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: Zama SAS
75002 Paris (FR)

(72) Inventors:
• Tap, Samuel Jacques Jean
  75002 Paris (FR)
• Paillier, Pascal Gilbert Yves
  75002 Paris (FR)
• Bonte, Charlotte Heidi F
  75002 Paris (FR)
• Orfila, Jean-Baptiste Guillaume Noël
  75002 Paris (FR)

(74) Representative: DeltaPatents B.V.
Fellenoord 370
5611 ZL Eindhoven (NL)

(54) **HOMOMORPHIC COMPUTATION ON CIPHERTEXTS ENCRYPTING MULTIPLE MESSAGES**

(57)    Some embodiments are directed to a cryptographic method for homomorphic computation. The method works on multiple messages encrypted in a single packed GLWE or GLWR ciphertext. The packed GLWE or GLWR ciphertext comprises a mask and a body. Each value in the body is associated with a different secret key and corresponds to a message in the multiple messages. Various homomorphic operation can be performed on the packed GLWE or GLWR ciphertext.

Fig. 2

EP 4 723 540 A1

**Description**

**TECHNICAL FIELD**

The presently disclosed subject matter relates to cryptographic, computer-implemented method for homomorphic computation, a system for homomorphic computation, and computer-readable media.

**BACKGROUND**

The encryption phase of contemporary homomorphic encryption schemes still results in significant data expansion and computationally expensive operations. There have been attempts to remedy this by packing multiple messages in a single encryption.

For example, some fully homomorphic encryption (FHE) schemes, such as CKKS [6], natively support Single Instruction, Multiple Data (SIMD) operations. For other schemes, such as BGV [7], FV [8], and B/FV [Bra12], packing techniques supporting SIMD operations have been developed [9]. These optimizations enable users to achieve improved amortized runtimes.

In TFHE, see, e.g., [CGGI20], however, the structure of operations does not align with SIMD packing; see also FHEW in [4] which is a type of TFHE.

Specifically, TFHE requires handling Learning With Errors (LWE) ciphertexts, although Generalized LWE (GLWE) ciphertexts are used internally in some algorithms, such as in the Programmable Bootstrapping (PBS). In contrast, BGV, FV, B/FV, and CKKS rely directly on GLWE ciphertexts, which allow for the reuse of the same mask randomness (k N integers) across N messages. TFHE lacks a variant of bootstrapping that relies solely on GLWE ciphertexts, thereby preventing the exploitation of these more compact ciphertexts.

The straightforward packing solution in TFHE involves using a packing key-switching technique to pack LWE samples into a GLWE structure. Similar to BGV, FV, B/FV, and CKKS, this allows the reuse of the same mask randomness. However, on this GLWE structure, only linear operations can be performed. To execute a PBS, one must first extract each message from the GLWE ciphertext back into LWE format through several sample extractions, perform PBS on each LWE ciphertext individually, and then repack them into a single GLWE using the packing key-switching process once more.

While TFHE bootstrapping achieves low latency, improving its throughput remains an active area of research. Advancements in this area would enable TFHE to support amortized computations, which is particularly advantageous in real-world applications where batch processing is feasible, such as in neural network evaluations using FHE.

**SUMMARY**

It would be advantageous to have an improved ciphertext type that supports packing of multiple messages in a single ciphertext.

A cryptographic, computer-implemented method for homomorphic computation, a system for homomorphic computation, and computer-readable media are described in the accompanying claims. Specific embodiments of the invention are set forth in the dependent claims.

Some embodiments are directed to a cryptographic method for homomorphic computation. The method works on multiple messages encrypted in a single packed GLWE ciphertext. The packed GLWE ciphertext comprises a mask and a body. Each value in the body is associated with a different secret key and corresponds to a message in the multiple messages. Various homomorphic operation can be performed on the packed GLWE ciphertext.

The encryption phase of contemporary homomorphic encryption schemes still leads to a significant data expansion and computationally expensive operations. To mitigate these properties of homomorphic encryption, techniques have been developed to pack multiple messages into one ciphertext, such that one homomorphic operation operates on multiple messages at the same time.

Embodiments use a new ciphertext format that allows to encode and encrypt multiple messages into one ciphertext. All homomorphic operations of the traditional TFHE scheme and its variants can be used with this new ciphertext format. In comparison with traditional packing methods that use the ring learning with error format, the packing format of this invention offers more flexibility.

Homomorphic computation systems are electronic, and may comprise one or more electronic devices, in particular one or more computers.

An aspect of the invention is a computation method. An embodiment of the method may be implemented on a computer as a computer implemented method, or in dedicated hardware, or in a combination of both. Executable code for an embodiment of the method may be stored on a computer program product. Examples of computer

program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. For example, a method according to the embodiment may comprise uploading the computer program to a server, enabling the computer program to be downloaded from this server, and facilitating the download of the computer program from the server.

## BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a homomorphic system,
Figure 1b schematically shows an example of an embodiment of a homomorphic system,
Figure 2 schematically shows an example of an embodiment of a packed GLWE ciphertext,
Figure 3 schematically shows an example of an embodiment of a packed GGSW ciphertext,
Figure 4 shows a graph comparing amortized cost of embodiments,
Figure 5 schematically shows an example of an embodiment of a method for homomorphic computation,
Figure 6a schematically shows a computer readable medium having a writable part comprising a computer program according to an embodiment,
Figure 6b schematically shows a representation of a processor system according to an embodiment.

### Reference signs list

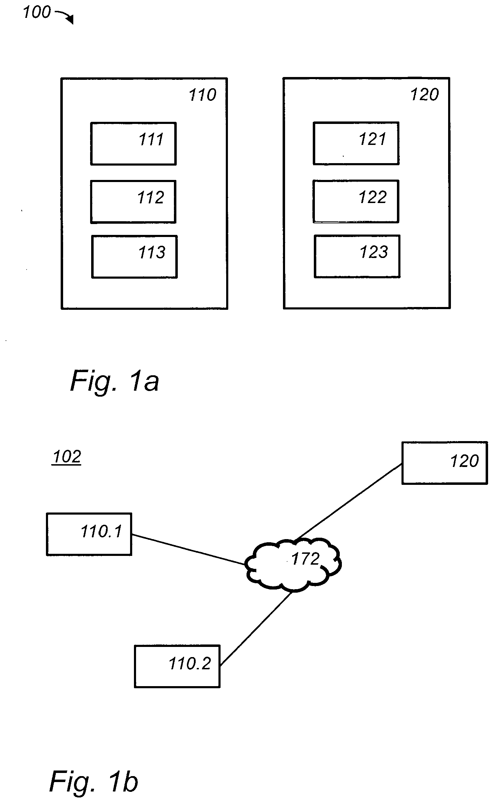

The following list of references and abbreviations corresponds to figures 1a-3, 6a-6b, and is provided for facilitating the interpretation of the drawings and shall not be construed as limiting the claims.

| | |
|---|---|
| 100, 102 | a homomorphic system |
| 110 | a homomorphic computation system |
| 110.1, 110.2 | a homomorphic computation system |
| 120 | a client system |
| 111, 121 | a processor system |
| 112, 122 | storage |
| 113, 123 | communication interface |
| 172 | a computer network |
| | |
| 200 | a packed GLWE ciphertext |
| 210 | a mask |
| 211-223 | values taken from a ring |
| 220 | a body |
| 221-223 | values taken from a ring |
| 231-233 | a masking operation |
| 240 | multiple secret keys |
| 241-243 | a secret key |
| 241.1-243.3 | a secret key value |
| 250 | multiple messages |
| 251-253 | a message |
| 300 | a packed GGSW ciphertext |
| 310 | a key correction part |
| 320 | a message correction part |
| 311-313 | a packed GLev ciphertext |
| 321-323 | a packed GLev ciphertext |
| 350 | multiple messages |
| 351-353 | a message |

1000, 1001     a computer readable medium
1010             a writable part
1020             a computer program
1110             integrated circuit(s)
1120             a processing unit
1122             a memory
1124             a dedicated integrated circuit
1126             a communication element
1130             an interconnect
1140             a processor system

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

Fully Homomorphic Encryption (FHE) is a family of encryption schemes allowing computations to be performed over encrypted data. FHE schemes use noisy ciphertexts for security reasons, e.g., ciphertexts containing some randomness. This noise grows after every homomorphic operation, and, if not controlled, it can compromise the message and prevent correct decryption. A technique called bootstrapping, e.g., see [1], allows noise reduction when it grows too large, using a public key, sometimes called the bootstrapping key. By using bootstrapping frequently to reduce noise, an arbitrary number of homomorphic operations can be performed. Unfortunately though, bootstrapping remains expensive in terms of both execution time and memory usage.

The noise of a freshly encrypted ciphertext is a small random value drawn from a given distribution $\chi(\sigma)$ parametrized by a parameter $\sigma$ and added to the message during encryption. Whenever operations are performed over ciphertexts, the randomness which is part of the ciphertexts is modified as a side effect.

The relationship between the input noise and the output noise of an operation is modeled by what is referred to as a noise formula, e.g., a formula modeling and/or describing the evolution of noise during the computation of the operation.

For convenience, it is assumed herein that the distribution $\chi$ is a centered Normal distribution with a standard deviation $\sigma$. Note however, that it could be extended to other noise distributions. For example, the distribution may be a uniform noise distribution. During operations over ciphertexts, the distribution of the noise inside a ciphertext typically changes.

When it is stated that a sample contains more noise than another, this means that the noise inside the ciphertext is drawn from a normal distribution with a larger standard deviation.

The TFHE scheme, see e.g., [2], [3], [4], distinguishes itself from other FHE schemes by supporting an efficient bootstrapping. The term TFHE-like schemes refers to fully homomorphic encryption schemes that include a bootstrapping algorithm, capable of taking as input a ciphertext and outputting a ciphertext of the same message with reduced noise and programmable meaning that a univariate function can be evaluated simultaneously as the noise is being reduced. This is referred to as Programmable bootstrapping (PBS).

For example, the bootstrapping algorithm may evaluate the homomorphic decryption of the input ciphertext in the exponent of a polynomial.

The bootstrapping typically comprises 3 steps:

Modulus switching (MS)
Blind rotation, (BR)
Sample extraction, (SE)

In an embodiment, a TFHE PBS outputs a ciphertext with an amount a noise level, or noise level, independent of the input ciphertext noise.

The algorithms described herein may use several parameters. In experiments that were conducted, the LWE dimension ($n$) took a wide range of values: from 400 (small precision) to 2048 (big precision, corresponding to approximately 20 bits). The polynomial size ($N$) took power-of-two values between $2^8$ and $2^{17}$. Note that other values that are not a power of 2 are also possible. The GLWE dimension ($k$) was between 1 and 6. The decomposition log base (

$\mathfrak{B}$) and the level ($\ell$) took values between 1 and 64; for example, one may take the product of log base ($\mathfrak{B}$) and level ($\ell$) to be equal to the logarithm of the ciphertext modulus.

Ciphertexts encrypted using contemporary homomorphic encryption schemes tend to be significantly larger than the plaintext they encrypt. Understanding the bandwidth limits of homomorphic encryption is not only theoretically interesting but also practical, as a high-rate homomorphic encryption scheme would benefit several applications, such as private information retrieval. One example of a high-rate homomorphic encryption scheme is the one proposed by Damgård and Jurik [10]. However, the Damgård-Jurik cryptosystem is only additively homomorphic, relatively expensive, and insecure against quantum computers.

Methods for compressing GSW ciphertexts have been described in [11], [12]. However, the compressed format is no longer a GSW ciphertext and supports only additive homomorphic operations and multiplication with a small, encrypted scalar. Another scheme [13] constructs a rate-1 FHE scheme, but like [11], this scheme is not fully homomorphic. This scheme can be designed to support a predetermined number of homomorphic operations, but the compressed format remains a leveled homomorphic encryption scheme. The present disclosure introduces a compressed format that allows PBS operations and is thus fully homomorphic in the compressed format.

**Figure 1a** schematically shows an example of an embodiment of a homomorphic computation system 110 and of an embodiment of a client system 120. Homomorphic computation system 110 and client system 120 may be part of a homomorphic system 100.

For example, homomorphic system 100 may be used in scenarios where data privacy is important, such as in cloud computing environments where sensitive data needs to be processed without revealing its contents to the computation system.

Homomorphic computation system 110 is configured to perform homomorphic operations on encrypted data. Specifically, it is designed to receive one or more packed ciphertexts that each encrypt multiple messages. These packed ciphertexts are typically lattice-based and may comprise noise. In particular, the packed ciphertexts may be based on the Learning With Errors problem or the Ring Learning With Errors problem, also known as the General Learning With Errors problem. The packed ciphertext may comprise multiple elements, which may be taken from some ring, e.g., an integer or

polynomial ring. The packed ciphertexts may also be based on the Learning with Rounding problem. The system can perform homomorphic operations on packed ciphertexts, operating on multiple messages simultaneously.

Client system 120 is configured to encrypt plaintext messages into one or more packed ciphertexts and send them to homomorphic computation system 110. Client system 120 may also generate and send auxiliary key material that computation system 110 might need to perform homomorphic operations on the packed ciphertexts, e.g., key switching keys and the like. Client system 120 is configured to receive encrypted results from computation system 110, and decrypt the results.

Homomorphic computation system 110 is configured to perform various homomorphic operations on packed ciphertexts. The packed ciphertexts may be obtained from client system 120, or they may be the result of homomorphic operations, e.g., the packed ciphertexts may be intermediate results. The homomorphic operations for which homomorphic computation system 110 is configured may include one or more of the following non-limited list:

1. Scalar multiplication of the packed ciphertext
2. Computing linear combinations of multiple packed ciphertexts
3. Performing modulus switches
4. Evaluating lookup tables on the multiple messages, including the ability to apply different lookup tables to different messages within the same packed ciphertext
5. Reducing noise for the multiple messages encrypted in the packed ciphertext
6. Computing external products on a packed ciphertext
7. Executing packed conditional multiplication (cmux) operations
8. Performing key switches
9. Homomorphically permuting the multiple messages encrypted in the packed ciphertext
11. Performing secret homomorphic linear operations by computing linear combinations of messages in single or multiple packed ciphertexts

This system allows for secure computation on sensitive data without revealing the underlying information to the computing party, thereby maintaining data privacy and confidentiality throughout the computation process. The ability to perform various operations on packed ciphertexts, including lookup table evaluations, noise reduction, secret permutations, and secret linear operations directly on packed ciphertexts can improve the efficiency of the system.

Homomorphic computation system 110 may comprise a processor system 111, a storage 112, and a communication interface 113. Client system 120 may comprise a processor system 121, a storage 122, and a communication interface 123.

In the various embodiments of communication interfaces 113 and/or 123, the communication interfaces may be selected from various alternatives. For example, the interface may be a network interface to a local or wide area network, e.g., the Internet, a storage interface to an internal or external data storage, an application interface (API), etc.

Storage 112 and 122 may be, e.g., electronic storage, magnetic storage, etc. The storage may comprise local storage, e.g., a local hard drive or electronic memory. Storage 112 and 122 may comprise non-local storage, e.g., cloud storage. In the latter case, storage 112 and 122 may comprise a storage interface to the non-local storage. Storage may comprise multiple discrete sub-storages together making up storage 112 and 122.

Storage 112 and/or 122 may be non-transitory storage. For example, storage 112 and/or 122 may store data in the presence of power such as a volatile memory device, e.g., a Random Access Memory (RAM). For example, storage 112 and/or 122 may store data in the presence of power as well as outside the presence of power such as a non-volatile memory device, e.g., Flash memory. Storage may comprise a volatile writable part, say a RAM, a non-volatile writable part, e.g., Flash. Storage may comprise a non-volatile non-writable part, e.g., ROM.

The systems 110 and 120 may communicate internally, with each other, with other devices, external storage, input devices, output devices, and/or one or more sensors over a computer network. The computer network may be an internet, an intranet, a LAN, a WLAN, a WAN, etc. The computer network may be the Internet. The systems 110 and 120 may comprise a connection interface which is arranged to communicate within homomorphic system 100 or outside of homomorphic system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 113 may be used to send or receive digital data, e.g., packed ciphertexts for homomorphic computation. The communication interface 123 may be used to send or receive digital data, e.g., plaintext data to be encrypted into packed ciphertexts or encrypted results to be decrypted.

Homomorphic computation system 110 and client system 120 may have a user interface, which may include well-known elements such as one or more buttons, a keyboard, display, touch screen, etc. The user interface may be arranged for accommodating user interaction for performing tasks such as initiating homomorphic computations on packed ciphertexts or viewing decrypted results.

The execution of systems 110 and 120 may be implemented in a processor system. The systems 110 and 120 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Systems 110 and 120 may comprise multiple processors. A processor circuit may be implemented in a distributed fashion, e.g., as multiple sub-processor circuits. For example, systems 110 and 120 may use cloud computing.

Typically, the homomorphic computation system 110 and client system 120 each comprise one or more microprocessors which execute appropriate software stored at the device; for example, that software may have been downloaded and/or stored in a corresponding memory, e.g., a volatile memory such as RAM or a non-volatile memory such as Flash.

Instead of using software to implement a function, the systems 110 and 120 may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, homomorphic computation system 110 and server 120 may comprise circuits, e.g., for cryptographic processing, and/or arithmetic processing.

In hybrid embodiments, functional units are implemented partially in hardware, e.g., as coprocessors, e.g., cryptographic coprocessors, and partially in software stored and executed on the device.

**Figure 1b** schematically shows an example of an embodiment of a homomorphic system 102. System 102 may comprise multiple client systems; shown are homomorphic computation system 110.1 and 110.2. Homomorphic system 100 may comprise multiple computation systems, shown is computation system 120.

The systems are connected through a computer network 172, e.g., the Internet. The homomorphic computation systems 110 and client system 120 may be according to an embodiment.

Below, an example of a packed ciphertext is disclosed, which can be used for homomorphic computation.

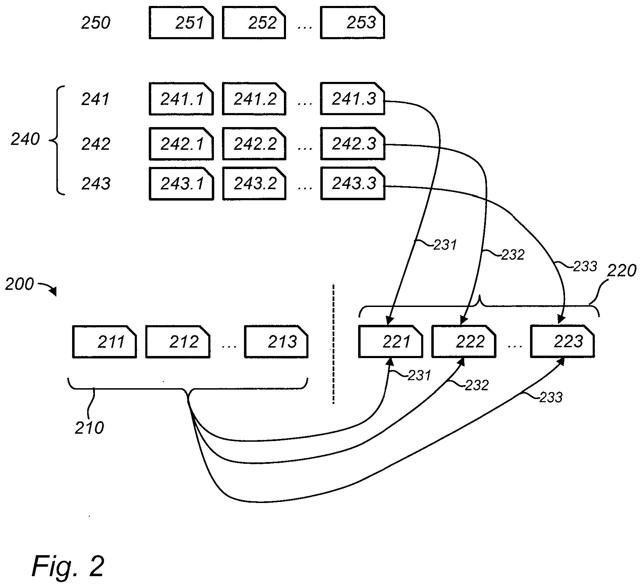

**Figure 2** schematically shows an example of an embodiment of a packed GLWE ciphertext 200. A packed GLWE ciphertext is also referred to as a PACK-GLWE ciphertext. In this document, we focus on extending GLWE but we could also extend (G)LWR [BPR12], everything presented next works immediately with (G)LWR, the only difference lies in the encryption algorithm which leverage a modulus switch to create the randomness in the ciphertext instead of explicitly adding noise to the body.

Packed ciphertext 200 encrypts multiple messages 250 in a single packed GLWE ciphertext 200. Shown here are messages 251, 252, and 253 in multiple messages 250; there may be two messages or more than 3 messages instead.

Packed ciphertext 200 comprises a mask 210 and a body 220. Mask 210 and a body 220 each comprise multiple values, taken from a finite ring. Typically, the ring is either $\mathbb{Z}_q$, also referred to a $\mathbb{Z}/q\mathbb{Z}$ or $\mathbb{Z}_q[X]/(X^N+1)$), also referred to as $\Re_{q,N}$.. Here $q$ may be a power of 2, e.g., $2^{32}$ or $2^{64}$. It is not necessary for q to be a power of 2, although this a convenient choice. Here *N* is a parameter, e.g., 1024.

Note that we define everything on $\mathbb{Z}_q$ but we could have defined everything on the torus $\mathrm{T}/\mathbb{Z}$. It is made possible because there is an isomorphism between $\mathbb{Z}_q$ and

$$\frac{1}{q}\mathbb{Z}_\square/\mathbb{Z}_\square \quad .$$

The sizes of mask 210 and body 220 do not need to be equal, and typically are not. For example, for packed LWE the number of values in mask 210 is usually higher than the number of values in body 220. For example, a usual size for the mask for a packed LWE ciphertext is between 800-1000-though both larger and smaller masks are possible. For a packed GLWE on the other hand, the size of the mask is usually between 1 and 4-again larger sizes being possible. In both cases, the size of the body will be at least 2, and typically at most 20-although larger body sizes are possible, and may in fact be preferred for some applications.

Figure 2 shows values 211, 212, and 213 in mask 210, and values 221, 222, and 223 in body 220. The number of values in body 220 is equal to the number of messages 250 that are in the packed ciphertext.

For example, packed ciphertext 200 may be represented as a vector or array, e.g., by concatenating the values in mask 210 and body 220. For example, the packed GLWE ciphertext may be represented as $(A_1, \cdots , A_k, B_1, ..., B_w)$, comprising a mask $(A_1, \cdots , A_k)$ and a body $(B_1, ... , B_w)$. As shown body 220 has body values 221, 222, and 223, while mask 210 has mask values 211, 212, and 213. Body and/or mask can have more than 3 values. The body could have two values. The mask could have 1 or 2 values.

Each value in the body is associated with a different secret key and corresponds to a different message in the multiple messages. As shown in figure 2, body value 221 corresponds to secret key 241, and message 251; body value 222 corresponds to secret key 242, and message 252; body value 223 corresponds to secret key 243, and message 253.

The secret keys have the same length as mask 210, with values taken from the ring. In some embodiments additional restrictions are placed on secret key values, e.g., only binary, or ternary values, or values selected from a distribution, e.g., Gaussian distribution.

A value in the body is obtained from masking the corresponding message with the mask 210 and the associated secret key. The same mask is used to mask the multiple messages. For example, using mask 210 and the associated secret key, a masking value may be computed, typically as the dot product of a key and mask 210. The masking value is added to an encoding of the message to which noise is also added. A small amount of noise is important to avoid the system from being fully linear. Encoding of the message is typically done by taking a multiple of the message, e.g., by multiplying with a power of 2.

For example, a packed GLWE ciphertext for multiple messages $m_1, ... , m_w$ encrypted under keys $\mathbf{S} = (\mathbf{S}_1, ..., \mathbf{S}_w)$ may be defined as a set of values, e.g., a vector, $(A_1, \quad ... \quad , \quad A_k, \quad B_1, \quad ... \quad , \quad B_w)$, wherein

$$B_j = \sum_{i=1}^k A_i \cdot S_{j,i} + m_j + E_j \in \Re_{q,N}, \forall 1 \le j \le w \text{ , wherein}$$

$E_j \in \Re_{q,N}$ is a polynomial of noise terms

$A_i \in \Re_{q,N}$ is a polynomial of the mask

$S_j \in \Re_{q,N}$ is a polynomial secret key having polynomials $S_{j,i}$ for $1 \le i \le k$.

The polynomial of noise terms may be drawn from a noise distribution, such as a Gaussian distribution. Instead of adding a noise polynomial, one could use a learning with rounding type ciphertext.

For example, a packed GLWR ciphertext for multiple messages $m_1, ..., m_w$ encrypted under keys $\mathbf{S} = (\mathbf{S}_1, ..., \mathbf{S}_w)$ may be defined as a packed GLWE ciphertext with polynomials defined on $\Re_{q',N}$ with q' > q$_\square$ on which we apply a modulus switch to cast the polynomials from $\Re_{q',N}$ into $\Re_{q,N}$ i.e, we apply $\mathrm{x}: \rightarrow \mathrm{Round}(\frac{q}{q'}\mathrm{x})$ on each coefficient of each polynomial in the mask and the body. If one chooses on q' correctly, the noise introduced by the modulus switch is big enough for the security to hold and after a correct encryption.

For example, one may obtain a GLWR ciphertext by starting with

$(A_1, \cdots, A_k, B_1, \ldots, B_w)$, wherein $B_j = \sum_{i=1}^{k} A_i \cdot S_{j,i} + m_j \in \Re_{q',N}, \forall 1 \leq j \leq$ w, wherein the Round function is applied to all coefficients of $A_i$ and $B_j$. After this operation the elements in the GLWR ciphertext are elements of $\Re_{q,N}$.

A packed GLWR ciphertext is indistinguishable from a packed GLWE ciphertext. Accordingly, all the operations defined herein for packed GLWE ciphertexts may also be applied to a packed GLWR ciphertext. A packed GLWR ciphertext is compatible with a packed GGWS ciphertext, as further expanded below.

Here the messages are encoded to allow later decryption in the presence of noise. That is, messages $m_1, \ldots, m_w$ are encoded values of the true messages. For example, one way to encode a message is to select them from a subset of

$\Re_{q,N}$ and multiply them with a multiplier $\triangle$, e.g., add $\triangle\, m_j$ in the above formula for the body, wherein the message is chosen from a message space, which is a subspace of $\Re_{q,N}$. Other known encoding types known from the art can be applied here.

An important type of packed GLWE ciphertexts is wherein the polynomials have degree zero. This corresponds to taking the exponent $N = 1$, in the definition of $\Re_{q,N}$. In this case the various values may be taken from a non-polynomial

ring, e.g., $\mathbb{Z}_q$ , e.g., the values in the secret key $S_{j,i}$, the values in the mask $A_i$, the values in the body, etc.

The inventors realized that the security implied by the Learning With Errors problem or the more general Ring Learning With Errors problem, also known as Generalized learning with errors, can be extended to packed GLWE values, in particular if the keys used for the different messages are different, e.g., independently selected from the key distribution.

The inventors note that a specific embodiment, one could allow a relationship between the keys $\mathbf{S}_1, \ldots, \mathbf{S}_w$ and thus reduce the amount of key material. For example, one could select a random seed and generate the keys therefrom, e.g., using a key derivation function. Preferably, a cryptographically secure key derivation function is used. However, generally speaking a relationship between keys could reduce the security of the system, and accordingly, it is preferred to select the keys independently, e.g., by random or pseudorandom selection. In case pseudorandom selection is used, preferably, a cryptographically secure random number generator is used.

The inventors realized that packed ciphertexts, in particular packed GLWE ciphertexts, are suitable for performing a homomorphic operation, that can act on the multiple messages at the same time.

A homomorphic operation performs a mathematical transformation or function directly on encrypted data in such a way that the operation carried out on the ciphertexts results in an encrypted form of the output of the corresponding operation on the plaintexts. Note that the operation is applied to all the encrypted messages simultaneously in a single computational step, rather than being performed on each message individually. Conventionally, a homomorphic operation would be performed on each encrypted message separately, on a per-message basis, with each message undergoing an individual transformation. In an embodiment, however, the homomorphic operation acts directly on the group of messages in a single step, treating the group as a whole rather than as discrete units. Furthermore, the group of body values corresponding to each message is associated with only a single mask. In an embodiment, the homomorphic operation computes on one mask for the whole body instead of separate masks for each message/body value.

The homomorphic operation does not need access to the plaintext version of the messages, nor to the secret keys 240 that were used to encrypt them, although auxiliary key material may be used in the homomorphic operations, e.g., key switching keys and the like. The auxiliary key material may be produced by a device with access to keys 240, e.g., client system 120.

For example, the homomorphic operation may comprise computing a scalar multiple of the packed GLWE ciphertext, e.g., a public integer scalar $\lambda$ multiplied with each encrypted message. This can be done by multiplying each of the values in mask and body with the scalar. Another homomorphic operation that can be extended to a packed GLWE is computing a linear combination of the multiple packed GLWE ciphertexts. In particular, two or more packed GLWE ciphertexts can be added or subtracted by adding or subtracting component wise. Another important operation that extends to packed ciphertexts such as these is the modulus switch, wherein each of the values in the mask and body are scaled. For example, the scaling may be performed on elements in either $\mathbb{Z}_q$ , e.g., because the packed GLWE ciphertext values is non-polynomial, or on the polynomial coefficient taken from $\mathbb{Z}_q$ . Typically, the scaling is performed from a larger power of 2 to a smaller power of 2.

However, more advanced homomorphic operations can be extended to packed GLWE ciphertexts as well. As further discussed herein, the inventors have demonstrated that a wide range of homomorphic operations can be applied to packed GLWE ciphertexts, leveraging the advantages that packing multiple messages in one ciphertext brings. These operations include both transformations, such as scalar multiplication and linear combinations, as well as more complex processes, such as evaluating lookup tables or performing noise reduction across multiple messages.

Additionally, advanced operations like external products and key switches are also feasible with packed GLWE ciphertexts, even without requiring access to the plaintexts or secret keys used for encryption. For external products, a packed GLWE ciphertext may be multiplied with a packed GGSW ciphertext.

A key switch, also referred to as a PACK-key switch, takes as input a packed GLWE ciphertext and outputs a packed GLWE ciphertext, using auxiliary key switching keys. The output packed GLWE ciphertext encrypts the same multiple messages as the input packed GLWE ciphertext but under a different key as indicated by the auxiliary key switching keys. The latter is a very useful operation to have in a homomorphic computation system.

A particularly interesting operation, which is particularly possible for a packed ciphertext but not for an unpacked sequence of ciphertexts for the corresponding messages is homomorphic permutations. In a homomorphic permutation, the messages are permuted according to a secret permutation unknown to the homomorphic computation system.

Another operation specific for packed ciphertexts such as these are secret linear operations. Here, a linear operation that acts on multiple messages is homomorphically performed. In this case, not only the data that is operated upon remains secret to the computation system, but also the particular homomorphic operation that is performed. This is advantageous as linear operations, such as matrix multiplications, are used in neural networks, and this helps keep the neural network weights secret from the computation network.

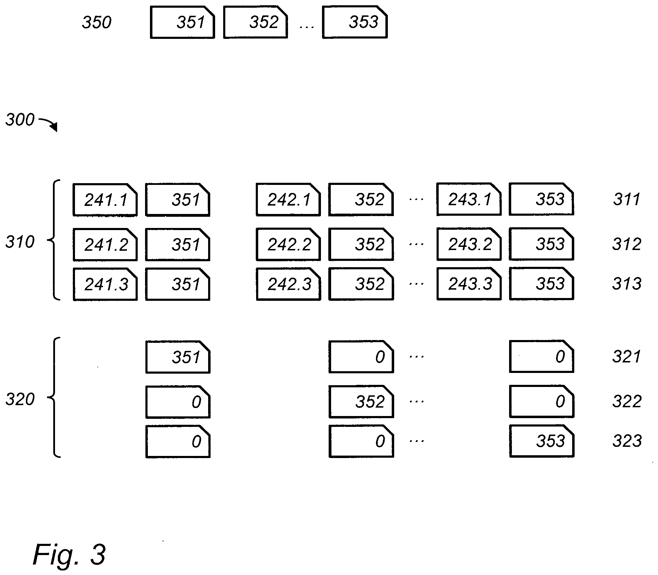

Embodiments of another type of packed ciphertext are described with reference to figure 3.

**Figure 3** schematically shows an example of an embodiment of a packed GGSW ciphertext 300. Having a packed GGSW ciphertext is important as it allows external products. This in turn allows the construction of a cmux, programmable bootstrapping, and the like.

Shown in figure 3 is a packed GGSW ciphertext 300. Packed GGSW ciphertext 300 encrypts multiple messages 350, so that they can be multiplied in an external product with multiple messages encrypted in a packed GLWE ciphertext. For example, a packed GLWE ciphertext 200 encrypting messages 250 could be externally multiplied with a packed GGSW ciphertext 300 encrypting messages 350. In the special case of an external product in a bootstrapping, both packed GLWE ciphertext 200 and packed GGSW ciphertext 300 are encrypted with the same multiple keys 240, though in a different manner, in the general case there is no such restriction.

Packed GGSW ciphertext 300 comprises two parts, loosely called, a key correction part 310 and a message correction part 320. Key correction part 310 is chosen to ensure that secret key terms cancel in the external product, while the message correction part 320 ensures a correct result is still achieved.

Ciphertext 300, in particular parts 310 and 320, comprises multiple packed GLev ciphertexts. For key correction part 310, packed GLev ciphertexts 311-313 are shown, and for message correction part 320, packed GLev ciphertexts 321-323 are shown. There may be two GLev ciphertexts, or more than 3.

In the packed GLevs, the messages are divided by a series of powers of a parameter. A packed GLev ciphertext, also referred to as PACK-GLev, for multiple messages comprises a sequence of packed GLWE ciphertexts for the multiple messages divided by powers of a parameter $\mathfrak{B}$. The messages that are encrypted in these GLev are derived from the messages 350.

Conceptually, a packed GLev ciphertext can be thought of as a packed GLWE; however, using multiple packed GLWE ciphertexts where the messages are divided by increasing powers of a parameter $\mathfrak{B}$ helps to control the noise.

Packed GLev ciphertexts, e.g., a sequence of multiple GLWEs for the same set of messages but divided by a series of powers of a parameter $\mathfrak{B}$, are applied to messages that are corrected with the secret key so that the external product works out.

A packed GGSW ciphertext is thus a sequence of multiple packed GLevs for the same set of messages, partitioned into two collections of packed GLevs: the key correction part and the message correction part.

In particular, it was found that to create the packed GLev ciphertexts for the key correction part for a particular set of messages, e.g., for messages $m_1$ up to $m_w$, each message is multiplied with a one of the polynomial of its respective secret key. These are the same secret keys $S_1$ up to $S_w$ that are also used in an encrypted packed GLWE that form the packed GLev. In particular, what works is to multiply each message $m_1$ up to $m_w$ in the first packed GLev 311 with the first polynomial of the keys $S_1$ up to $S_w$, to multiply each message $m_1$ up to $m_w$ in the second packed GLev 312 with the second polynomial of the keys $S_1$ up to $S_w$, and so on; e.g., multiply the messages in the i-th GLev with the i-th polynomial of the keys. In particular, in an embodiment the multiplication also includes a multiplication with -1.

There are other ways to make the external multiplication work, e.g., use the polynomials or the digits of the secret keys in another order, e.g., multiply with a different number than -1, and so on.

It turns out that the key correction part 310 in itself is not sufficient to make the external product work, and considerable research was needed to find a message correction part 320 that would make the external product for packed ciphertext come out right. In an embodiment, the message correction part 320 for a packed GGSW ciphertext comprises a sequence of packed GLev ciphertexts, wherein each packed GLev ciphertext corresponds to one message of the multiple messages in the packed GGSW ciphertext. Shown in figure 3, the first packed GLev ciphertext 321 is applied to the message $m_1$, for its first message, but to the message 0 for all the other messages; the second packed GLev ciphertext 322 is applied to the message $m_2$, for its second message, but to the message 0 for all the other messages. In particular, the i-th packed GLev ciphertext is applied to the message $m_i$, for its i-th message, but to the message 0 for all the other messages.

It turns out that variations are possible, for example, a different order of the messages, a different multiplier-the above uses each message times 1, but one could take -1, if one were to make the appropriate corrections.

Accordingly, if a packed GLWE encrypts the messages $a_1$ up to $a_w$, and a packed GGSW ciphertext encrypts the messages $b_1$ up to $b_w$, then the external product between them will encrypt the messages $a_1 b_1$ up to $a_w b_w$. Typically, an encrypted GGSW is prepared by a client device, as it has access to the secret key. Nevertheless, the ability to perform multiplications on multiple operands opens up various other operations, e.g., noise reduction, blind rotation, programmable bootstrapping, and so on. In addition, the packed nature of these ciphertexts allows new homomorphic operations that were not possible before or very costly, e.g., blind permutation, blind linear operations, where even the operation being performed is secret to the homomorphic computation system.

Below, a mathematical description is given for one particular embodiment.

A packed GLev ciphertext, also referred to as PACK-GLev, for multiple messages, e.g.,

$\overline{CT} \in \text{PACK-GLev}_S^{\mathfrak{B},\mathfrak{l}}(m_1, \ldots, m_w) \subset \mathfrak{R}_{q,N}^{\mathfrak{l} \cdot (k+w)}$ may be defined as follows

$$\overline{CT} \in \left( \text{PACK-GLWE}_S \left( \frac{m_1 \cdot q}{\mathfrak{B}}, \ldots, \frac{m_w \cdot q}{\mathfrak{B}} \right), \ldots, \text{PACK-GLWE}_S \left( \frac{m_1 \cdot q}{\mathfrak{B}^{\mathfrak{l}}}, \ldots, \frac{m_w \cdot q}{\mathfrak{B}^{\mathfrak{l}}} \right) \right)$$

Here the $\mathfrak{B}$ is a parameter, to control noise. The sequence of powers runs from exponent 1 to exponent $l > 1$. The number of powers used, also referred to as the number of levels, determines an amount of noise control. The amount of noise control needed, and thus the number of power depends on the applications and other parameters. The number of levels may be determined either mathematically or empirically.

Parameter $l$ has an impact on both the noise and the cost of the computation, while $\mathfrak{B}$ mostly has impact on the noise. Many values will lead to a working system, and conventional values can be used. In practice, the parameter $l$ is selected using an optimization that minimizes the cost of the computation with noise constraints to guarantee security and correctness with a sufficiently high probability, e.g., a failure probability of $2^{-64}$ or less, $2^{-80}$ or less, or $2^{-128}$ or less, etc. For a ciphertext modulus of $q = 2^{64}$, a typical values for $l$ is 2 but could also be more than 20.

A packed GGSW ciphertext, also referred to as PACK-GGSW, for multiple messages may be defined as

$\overline{\overline{CT}} \in \text{PACK-GGSW}_S^{\mathfrak{B},\mathfrak{l}}(m_1, \cdots, m_w) \subset \mathfrak{R}q, N^{\mathfrak{l} \cdot (k+w) \times (k+w)}$ as a collection of PACK-GLev samples as follows

$$\overline{\overline{CT}} \in \begin{pmatrix} \text{PACK-GLev}_S^{\mathfrak{B},\mathfrak{l}}\big(-S_{1,1} \cdot m_1, -S_{2,1} \cdot m_2, \cdots, -S_{w,1} \cdot m_w\big) \\ \text{PACK-GLev}_S^{\mathfrak{B},\mathfrak{l}}\big(-S_{1,2} \cdot m_1, -S_{2,2} \cdot m_2, \cdots, -S_{w,2} \cdot m_w\big) \\ \vdots \\ \text{PACK-GLev}_S^{\mathfrak{B},\mathfrak{l}}\big(-S_{1,k} \cdot m_1, -S_{2,k} \cdot m_2, \cdots, -S_{w,k} \cdot m_w\big) \\ \text{PACK-GLev}_S^{\mathfrak{B},\mathfrak{l}}(m_1, 0, \cdots, 0) \\ \text{PACK-GLev}_S^{\mathfrak{B},\mathfrak{l}}(0, m_2, \cdots, 0) \\ \vdots \\ \text{PACK-GLev}_S^{\mathfrak{B},\mathfrak{l}}(0, 0, \cdots, m_w) \end{pmatrix}$$

This allows an external product between the packed GLWE ciphertext and a packed GGSW ciphertext, which is a homomorphic operation.

To perform external product the packed GLWE ciphertext may be decomposed, e.g., using radix decomposition, and computing the dot product of the decomposed packed GLWE ciphertext and the packed GGSW ciphertext, obtaining a packed GLWE encryption of the multiplication of the multiple messages encrypted in the packed GLWE ciphertext and the corresponding multiple messages in the packed GGSW ciphertext.

In an embodiment, the homomorphic computation system computes a controlled multiplexer operation, also referred to as cmux on a packed GLWE ciphertext. For example, given two packed GLWE ciphertexts $c_0$ and $c_1$ and a series of control bits $b$, e.g., comprising bits $b_1, \ldots, b_w$, the CMUX operator acts as a selector to choose between the messages in $c_0$ and $c_1$. Here the first bit $b_1$ selects between the first message in $c_0$ and $c_1$, the second bit $b_2$ selects between the second message in $c_0$ and $c_1$, and so on; the i-th bit selecting between the i-th message in the packed ciphertexts.

In an embodiment, the controlled multiplexor may be implemented using an external product. For example, with packed GLWE ciphertexts $c_0$ and $c_1$, and a packed GGSW encryption $\mathfrak{C}_b$ of the control bits $b = (b_1, b_2, .., b_w)$ with each bit in $Z_2$. Then the cmux can be computed through an external product as

$$CMUX(\mathfrak{C}_b, c_1, c_0) = c_1 + \mathfrak{C}_b \boxdot (c_0 - c_1)$$

Having a controlled multiplexer, that operates on the messages in a packed ciphertext, one can execute a programmable bootstrapping algorithm, that is conventionally known on the level of a GLWE encryption for a single message, but performs it in parallel for each of the messages in a packed GLWE encryption. This may use as auxiliary key material the encryption as packed GGSW the bit of the secret keys 240. For example, the first packed GGSW may encrypt the first bits, 241.1, 242.1, 243.1, etc.; the second packed GGSW may encrypt the second bits, 241.2, 242.2, 243.2, etc., and so on. Instead of bits, one may advantageously use ternary values, e.g., -1, 0, 1.

For example, a programmable bootstrapping on packed values may comprise a series of three algorithms: (i) Switch Modulus, (ii) Blind Rotate, and (iii) Sample Extract. It is often followed by a packed GLWE Key Switching algorithm.

The modulus switching is typically performed prior to the blind rotation procedure. For example, the switch modulus algorithm may scale by $2N/q$ and rounds, e.g., to perform the operation Round[$2N(x \bmod q)/q$]. Other modulus switch operations are possible, for example, one may adopt the modulus switch defined in [33], [28], or [BPR24]. This operation may be performed on each value in a packed GLWE ciphertexts, e.g., on elements in $Z_q$

The Blind Rotate algorithm homomorphically applies a rotation over the coefficients of polynomials stored in a packed GLWE ciphertext. It is used to blindly put a desired coefficient in the constant term. This algorithm takes as input a (possibly trivial) packed GLWE ciphertext $c_T$ encrypting a series of test polynomials $T_i(X)$ each of degree $N$ - 1, and which encodes a lookup table, where the i-th coefficient represents the i-th value in the lookup table. The algorithms further takes a packed LWE ciphertext as input. The lookup tables will be applied to the corresponding messages in the packed LWE ciphertext.

The algorithm starts by initializing an accumulator, as a packed GLWE, wherein the messages may be $X^{-b_i}T_i(X)$ , here $b_i$ is the value in the body corresponding to the i-th message in the input packed LWE ciphertext and the i-th lookup table. For example, the accumulator may be initialized as a packed GLWE test polynomial. Using the encrypted digits of the secret keys, the algorithm successively updates the accumulator. $ACC \leftarrow CMUX(\mathfrak{C}_j, ACC, X^{a_j} \cdot ACC, )$, here $a_j$ refers to the j-th value in the mask of the input packed LWE ciphertext.

The output is a packed GLWE ciphertext encrypting a rotation of the test polynomials over as many positions as indicated by the packed LWE input. Given this a packed LWE ciphertext may be constructed by sample extraction, extracting the constant terms of the packed GLWE ciphertext.

After the blind rotation and sample extraction, the resulting packed LWE ciphertext may be encrypted with a secret key that is different from the one used on input. In order to return to the original key, one may perform a key-switching operation. This operation is optional.

The programmable bootstrapping may be used for the evaluation of a lookup table on the multiple messages. This may be a different lookup table for each message. Two or more, or even all messages may share the same lookup table.

For example, a reduction of the noise for the multiple messages encrypted in a packed LWE ciphertext may be performed, e.g., using the programmable bootstrapping.

A packed key switch, also referred to as a PACK-key switch, takes as input a packed GLWE ciphertext and outputs a packed GLWE ciphertext. The packed key switch uses auxiliary key switching keys. The output packed GLWE ciphertext encrypts the same multiple messages as the input packed GLWE ciphertext but under a different key as indicated by the auxiliary key switching keys.

A packed external product may also be used to implement other operations on a packed GLWE. In particular, an external product may homomorphically permute the multiple messages encrypted in the packed GLWE ciphertext. Likewise a linear operation may be performed.

Below several further optional refinements, details, and embodiments are illustrated.

Notations

Let q be a positive integer, referred to as the ciphertext modulus. The ring denotes $\mathbb{Z}/q\mathbb{Z}$ . Let $N$ be a power of two, representing the degree of quotient polynomial. Then, we note $\Re_{q,N}$ the ring $\mathbb{Z}_q[X]/(X^N + 1)$ . It is strictly speaking not necessary for $N$ to be a power of 2, though this simplifies implementations.

Embodiments provide a new type of ciphertext that packs multiple messages into one ciphertext. This ciphertext type is compatible with classical FHE operators (PBS, linear operations, keyswitch, etc.), while offering new operations not previously supported or very costly to compute, e.g., blinded permutations, blinded linear operations, e.g., blind matrix multiplications. In a blinded operation, the homomorphic computation system not only does not know the data on which it is operating, but also does not know the operation it is performing. Furthermore, the packed ciphertext format introduced here allows a different lookup table to be evaluated for each packed message during one PBS.

In conventional TFHE-like schemes, the encryption procedure significantly increases the size of the data. A packed ciphertext according to an embodiment, reuses the LWE mask and thus reduces the data expansion.

In conventional TFHE-like schemes, performing a PBS over *d* ciphertexts typically requires repeating the PBS process *d* times. The new method described here incurs an additive cost for handling multiple messages instead of a multiplicative one. Already with packing two messages in one ciphertext, embodiments have advantages compared to the state of the art.

Traditional homomorphic encryption, based on the GLWE problem or its variants, involves a mask and a body. The mask is the randomness used to hide the message, while the body contains the actual message. Embodiments of the packed ciphertext format reduce data expansion by reusing the mask to encrypt multiple

messages. A packed ciphertext may be generated by producing multiple bodies with the same mask, while using a different key for each message to maintain security. Rather than encrypting each message in its own ciphertext, embodiments enable multiple messages to be encrypted in one extended ciphertext.

In order for the encryption to still be secure, preferably one uses a different key for each message that is packed in the same packed ciphertext. This implies that one will have as many different keys as messages that one wants to encrypt.

In some cases, there could be some relationships between the keys. For example, all keys could be generated from a common seed using a key derivation function. Nevertheless, in practice all keys are different, so that as many different keys are used as there are messages in a packed ciphertext. If generation from a seed or the like is used, preferably, a cryptographically strong key derivation function is used, e.g., based on a cryptographically strong hash function.

The new format supports traditional ciphertext operations (e.g., PBS, linear operations, keyswitch), enabling amortized computations. By extending programmable bootstrapping to the packed format, multiple messages can be processed simultaneously. Moreover, the packed PBS operation permits different lookup tables to be applied to different messages, a flexibility that cannot be achieved by previous packing methods.

Recent improvements and adaptations to TFHE operations can also be extended to the packed format. For example, following the framework outlined in [22], an extension of NGS-based bootstrapping for LWE samples can be applied to PACK-LWE samples, thus boosting the performance of amortized packed PBS operations.

In this section, we give examples of ciphertexts in the packed format and explain how the usual (T)FHE operations, such as PBS, linear operations, keyswitch, etc., can be performed on them.

First, we define the ciphertext types of this invention which allow packing multiple messages into one ciphertext. All common types of ciphertexts of TFHE-like schemes can be extended to support the packed ciphertext. In particular, a GLWE can be extended to a PACK-GLWE, a GLev [23] can be extended to a PACK-GLev and a GGSW to a PACK-GGSW.

**PACK-GLWE**

A PACK-GLWE ciphertext $\mathrm{CT} \in \mathrm{PACK\text{-}GLWE}_{\mathbf{S}}(m_1, \ldots, m_w) \subset \mathfrak{R}_{q,N}^{k+w}$ encrypted under $\mathbf{S} = (\mathbf{S}_1, \ldots, \mathbf{S}_w)$ may be defined as

$$(A_1, \cdots, A_k, B_1, \ldots, B_w)$$

with

$$B_j = \sum A_i \cdot S_{j,i} + \Delta m_j + E_j \in \mathfrak{R}_{q,N}, \forall 1 \leq j \leq w$$

where the mask *A* is the same for all the values in the body, which are each encrypting a different message. As usual with TFHE,

$E_j \in \mathfrak{R}_{q,N}$ is a polynomial of noise terms sampled from one of the usual distributions (Gaussian distribution, a uniform distribution, ...)

$A_i \in \mathfrak{R}_{q,N}$ is a polynomial called "mask" and its coefficients are sampled uniformly in $\mathbb{Z}/q\mathbb{Z}$ with *q* an integer called the ciphertext modulus (ex: $q = 2^{64}$ or $q = 2^{32}$)

$S_j \in \mathfrak{R}_{q,N}$ is a polynomial secret key, sampled from one of the usual distributions (Binary, ternary, gaussians, ...)

Instead of encoding the messages by multiplying with a parameter $\Delta$, e.g., a power of two, or a divisor of the ciphertext modulus, other types of message encoding may be used.

A PACK-GLWE ciphertext allows one to encrypt w ciphertexts in a smaller dataformat than the original GLWE encryption. Where the ciphertext representation of w messages in the conventional data format require $w(k+1)$ elements of $\mathfrak{R}_{q,N}$, the ciphertext representation in the packed format only requires $(k+w)$ elements of $\mathfrak{R}_{q,N}$.

**PACK-GLev**

A PACK-GLev ciphertext

$$\overline{CT} \in \text{PACK-GLev}_S^{\mathfrak{B},\mathfrak{l}}(m_1, \dots, m_w) \subset \mathfrak{R}_{q,N}^{\mathfrak{l} \cdot (k+w)}$$

may be defined as follow

$$\overline{CT} \in \left( \text{PACK-GLWE}_S\left(\frac{m_1 \cdot q}{\mathfrak{B}}, \dots, \frac{m_w \cdot q}{\mathfrak{B}}\right), \dots, \text{PACK-GLWE}_S\left(\frac{m_1 \cdot q}{\mathfrak{B}^{\mathfrak{l}}}, \dots, \frac{m_w \cdot q}{\mathfrak{B}^{\mathfrak{l}}}\right) \right)$$

**PACK-GGSW**

A PACK-GGSW $\overline{\overline{CT}} \in \text{PACK-GGSW}_S^{\mathfrak{B},\mathfrak{l}}(m_1, \dots, m_w) \subset \mathfrak{R}q, N^{\mathfrak{l} \cdot (k+w) \times (k+w)}$ is a collection of PACK-GLev samples and may be defined as follows

$$\overline{\overline{CT}} \in \begin{pmatrix} \text{PACK-GLev}_S^{\mathfrak{B},\mathfrak{l}}(-S_{1,1} \cdot m_1, -S_{2,1} \cdot m_2, \dots, -S_{w,1} \cdot m_w) \\ \text{PACK-GLev}_S^{\mathfrak{B},\mathfrak{l}}(-S_{1,2} \cdot m_1, -S_{2,2} \cdot m_2, \dots, -S_{w,2} \cdot m_w) \\ \vdots \\ \text{PACK-GLev}_S^{\mathfrak{B},\mathfrak{l}}(-S_{1,k} \cdot m_1, -S_{2,k} \cdot m_2, \dots, -S_{w,k} \cdot m_w) \\ \text{PACK-GLev}_S^{\mathfrak{B},\mathfrak{l}}(m_1, 0, \dots, 0) \\ \text{PACK-GLev}_S^{\mathfrak{B},\mathfrak{l}}(0, m_2, \dots, 0) \\ \vdots \\ \text{PACK-GLev}_S^{\mathfrak{B},\mathfrak{l}}(0, 0, \dots, m_w) \end{pmatrix}$$

if w = 1 then a PACK-GLWE is a traditional GLWE, a PACK-GLev is a traditional GLev and a PACK-GGSW is a traditional GGSW. In an embodiment, we have w > 1.

If $N = 1$, a GLWE ciphertext is an LWE ciphertext. Everything explained above has a special case called PACK-LWE where $N = 1$.

A further special case, is where $k = 1$ and $N > 1$, a GLWE ciphertext is an RLWE ciphertext, accordingly, the above can be adapted to obtain an PACK-RLWE ciphertext.

The core of the present disclosure is to extend traditional FHE operators to work with these new ciphertext types. As multiple messages may be included in one packed ciphertext, batch FHE operator evaluation can be performed, resulting in advantageous amortized timings. In particular, by extending the PBS operation to the packed ciphertext format, lookup table evaluation or noise reduction may be performed on multiple messages in parallel. The packed data format not only enables parallel evaluation of the PBS on multiple messages, but also provides more flexibility than previous packing methods. Defining the accumulator in packed data format allows for lookup table evaluation of different lookup tables on the various messages of the packed ciphertexts.

Below it is explained how to modify the usual algorithms to support these new ciphertext types.

**Linear Operations**

Linear operations on GLWE ciphertexts, e.g., as described in [24], can be extended to packed ciphertexts. Given $p$ integer polynomials $C_1, \ldots, C_p$ with $C_i \in \Re$, $\forall 1 \leq i \leq p$, $p$ PACK-GLWE ciphertexts $CT_1, \ldots, CT_p$ with $CT_i \in$

$$\text{PACK-GLWE}_\mathbf{S}\big(m_{i,1}, \ldots, m_{i,w}\big) \subset \Re_{q,N}^{k+w}, \forall 1 \leq i \leq p,$$

then the linear combination is given by the PACK-GLWE ciphertext

$$CT = \textstyle\sum_{i=1}^p C_i \cdot CT_i \in \text{PACK-GLWE}_\mathbf{S}\big(\sum_{i=1}^p C_i \cdot m_{i,1}, \ldots, \sum_{i=1}^p C_i \cdot m_{i,w}\big).$$

The added noise of the linear operation on packed ciphertexts is the same as the added noise for the usual linear operations, see [24] for the noise formula.

**Modulus Switch**

The traditional modulus switch (see [24]) can be extended to work on packed ciphertexts, e.g., PACK-LWE ciphertexts or PACK-GLWE ciphertexts.

Let $ct = (a_1, \ldots, a_n, b_1, \ldots, b_w)$, a PACK-LWE ciphertext. The modulus switching outputs a ciphertext $ct' = (a_1', \ldots, a_n', b_1', \ldots, b_w')$ such that

$$a'_i \leftarrow \left[\left[\left\lfloor \tfrac{a_i \cdot 2N}{q} \right\rceil\right]\right]_{2N} \text{ for } 1 \leq i \leq n \ .$$

$$b'_j \leftarrow \left[\left[\left\lfloor \tfrac{b_j \cdot 2N}{q} \right\rceil\right]\right]_{2N}' \text{ for } 1 \leq j \leq w$$

As almost all FHE operators, the modulus switch adds some noise to the input ciphertext. In this case, the added noise is the same as for the usual modulus switch. See [25] for the noise formula and its proof. Instead of $2N$ in the above formula, other integers may be used.

**External Product**

An external product may be defined using a PACK-GGSW (see above).

Given

- a PACK-GLWE ciphertext $CT \in \text{PACK} - GLWE_S^{\mathcal{B},l}(m_1, \ldots, m_w) \subset \Re_{q,N}^{k+w}$ encrypted under $S = (S_1, \ldots, S_w)$ such that $CT = (\{A_i\}_{i \in \{1, \ldots, k\}}, \{B_i\}_{i \in \{1, \ldots, w\}}) = (\{A_i\}_{i \in \{1, \ldots, k+w\}})$ and

- a PACK-GGSW $\overline{\overline{CT}} \in \text{PACK} - GGSW_S^{\mathcal{B},l}(\mu_1, \ldots, \mu_w) \subset \Re_{q,N}^{l(k+w) \times (k+w)}$ such that

$$\overline{\overline{CT}} = \begin{pmatrix} \overline{CT}_1 \\ \vdots \\ \overline{CT}_k \\ \overline{CT}_{k+1} \\ \vdots \\ \overline{CT}_{k+w} \end{pmatrix} \text{ with } \overline{CT}_k \text{ a } PACK\text{-GLev as defined as above,}$$

one can perform a traditional external product (e.g., rounding of each polynomial, (radix) decomposition of each polynomial using for example [22] and dot product between the decomposed polynomials and the PACK-GGSW). In the end, we get a PACK-GLWE ciphertext encrypting $(m_1 \cdot \mu_1, \ldots, m_w \cdot \mu_w)$.

For example, one may use the following algorithm

    1. Compute $A'_i$ by rounding each polynomial $A_i$ at the $l \log_2 \mathcal{B}$ bit.

2. Decompose $A'_i$ using for example a radix decomposition as explained in [10,22] to get $A'_i = \sum_{r=1}^{l} A'_{i,r} \frac{q}{\mathcal{B}^l}$ with coefficients of $A'_{i,r}$ in $\left\{\frac{-\mathcal{B}}{2}, \dots, \frac{\mathcal{B}}{2}\right\}$, define $A'^*_i = (A'_{i,1}, \dots, A'_{i,l})$

3. Compute and return $CT_{out} = \langle\{\{A'_{i,r}\}_{i\in\{1,\dots,k+w\},r\in\{1,\dots,l\}}, \overline{CT}\rangle = \sum_{i=1}^{k+w} \langle A'^*_i, \overline{CT}_i\rangle$

The noise added by this new packed external product is slightly bigger than the noise of a traditional external product. In practice, the first step adds the same amount of noise than in the traditional external product and the second step is noiseless. The difference lies in the third step where the dot product is larger (sum of $(k + w) \cdot \mathrm{I}$ elements) than in the traditional external product (sum of $(k + 1) \cdot \mathrm{I}$ elements).

Generally, having more noise may be disadvantageous, as larger parameters may be required compared to a traditional external product to maintain the same level of correctness. However, even though larger parameters may be selected (e.g., a larger level 1), this packed external product processes w messages simultaneously instead of requiring w traditional external products. Below is a brief comparison in terms of cost between the traditional external product and the new packed external product:

Traditional: $(k + 1) \cdot (\mathrm{I} + 1)$ (i)FFTs and $(k + 1)^2 \cdot \mathrm{I} \cdot N$ complex multiplications

Packed: $(k + w) \cdot (\mathrm{I} + 1)$ (i)FFTs and $(k + w)^2 \in \mathrm{I} \cdot N$ complex multiplications

Amortized Packed: $\left(\frac{k}{w} + 1\right) \cdot (\mathrm{I} + 1)$ (i)FFTs and $\frac{(k+w)^2}{w} \cdot \mathrm{I} \cdot N$ complex multiplications.

As long as w remains relatively small (say at most 10, at most 20 or at most 50), the amortized packed external product is better than doing several traditional external product.

## CMUX

Using the external product the conventional cmux operation can be extended to a packed cmux using the packed external product. See [24] for details on the cmux.

## Keyswitch

The keyswitch can be extended in a similar manner to the external product. Here, the construction of a packed keyswitch is described, which takes as input a PACK-LWE ciphertext and outputs a PACK-LWE ciphertext. However, the same approach may be applied to transition from a PACK-GLWE ciphertext to a PACK-GLWE ciphertext or from a PACK-LWE ciphertext to a PACK-GLWE ciphertext. For further discussion of different keyswitch variants (public and private), see [24].

Given a PACK-LWE ciphertext $ct_{in} \in \mathrm{PACK\text{-}LWE}_s(m_1, \dots, m_w) \subset \mathbb{Z}^{n+w}$ encrypted under $\mathbf{s} = (\mathbf{s}_1, \dots, \mathbf{s}_w)$ such that $ct = (\{a_i\}_{i\in\{1,\dots,n\}}, \{b_i\}_{i\in\{1,\dots,w\}})$ and

a list of PACK-Lev ciphertexts $\{\overline{ct}_i\}_{i\in\{1,\dots,n\}}$ s.t. $\overline{ct}_i \in \mathrm{PACK\text{-}Lev}_{s'}^{\mathcal{B},\mathrm{I}}(-s_{1,i}, -s_{2,i}, \dots, -s_{w,i}) \subset \mathbb{Z}^{\mathrm{I}\cdot(n'+w)}$,

we can

compute $a_i'$ (resp. $b_j'$) by rounding each $a_i$ (resp. $b_j$) at the $\mathrm{I} \in \log_2\mathcal{B}$ bit

decompose $a_i'$ (res. $b_j'$) using for instance a radix decomposition, to get $a_i' = \sum_{r=1}^{\mathrm{I}} a_{i,r}' \cdot \frac{q}{\mathcal{B}^r}$ with

$a_{i,r}' \in \left\{-\frac{b}{2}, \dots, \frac{b}{2}\right\}$

compute and return $ct_{out} = (\{0\}_{i\in\{1,\dots,n\}}, \{b_j\}_{j\in\{1,\dots,w\}}) + \langle\{a_{i,r}'\}_{i\in\{1,\dots,n\},r\in\{1,\dots,\ell\}}, \{\overline{ct}_i\}_{i\in\{1,\dots,n\}}\rangle$.

$ct_{out}$ is a PACK-LWE ciphertext encrypting $(m_1, \dots, m_w)$ under $\mathbf{s}'$.

The noise of the packed keyswitch is the same as the noise of a traditional keyswitch and the cost is slightly bigger:

Traditional: $n \in I \cdot (n' + 1)$ multiplications

Packed: $n \in I \cdot (n' + w)$ multiplications

The approach presented above can be used to adapt all keyswitch techniques found in the literature, including those introduced in [27].

### Blind Rotate

The blind rotate can be extended to a packed blind rotate using the packed cmux. See [24] for details on the blind rotate. Alternatively, the blind rotation can be performed by using automorphisms as described in [29], hence the packed extended automorphisms can be used to perform the packed blind rotation.

The traditional blind rotate performs a blind rotation on a lookup table, which can be encrypted or not. The rotation depends on the message in the input LWE ciphertext. The packed blind rotate can do the same, but instead of rotating one lookup table, w lookup tables may be rotated using each message in the input PACK-LWE ciphertext.

### Sample Extract

The sample extract can be immediately extended to a packed sample extract. A sample extract extracts an LWE ciphertext from a GLWE ciphertext. The new packed sample extract extracts a PACK-LWE ciphertext from a PACK-GLWE ciphertext. See [24] for details on the sample extract.

### PBS

Using the operations described above one can implement a packed PBS using:

a PACK-modulus switch (see above)
a PACK-blind rotate (see above)
a PACK sample extract (see above).

Given a PACK-LWE ciphertext $ct_{in} \in LWE_s(m_1, \cdots, m_w)$ and w lookup tables $\{L_i\}_{i \in \{1,...,w\}}$, at the end of the PACK-PBS, we get $ct_{out} \in LWE_s(L_1[m_1], \cdots, L_w[m_w])$, e.g., a PACK-LWE ciphertext encrypting evaluations of the lookup tables on each message.

Here, we explained how to extend the traditional TFHE PBS. The same can be done on every improvements of the TFHE PBS (for instance: [23], [25], [30], [31], [32], [33], [34], and its variants: the automorphism PBS [20], the PBS using NTRU [22]

### Automorphism

The evaluation of automorphisms can be extended to a packed automorphism by applying the automorphism map on every element of the PACK-GLWE separately. If desired, one can subsequently perform a PACK-GLWE to PACK-GLWE key switching. See [28] for details on the automorphism evaluation. As the evaluation of the automorphism map can be done on each component of the PACK-GLWE in parallel and the evaluation of the map $\psi_t$ is basically a permutation on the coefficients of the elements of $\mathfrak{R}$, the cost of this part of the computation is negligible. In addition, as $\psi_t$ is a norm-preserving map, it does not introduce a noise increase in the ciphertext. Hence the noise increase of the evaluation of an automorphism is equal to the noise increase of a PACK-GLWE to PACK-GLWE key switching.

In an embodiment, an automorphism, e.g., an GLWE automorphism is applied to a packed GLWE ciphertext by applying the automorphism on every element of the packed GLWE ciphertext separately. If desired, a key switching can be performed subsequently. For example, a blind rotation may be performed using such automorphisms.

### Other operations

The packed keyswitch presented above can also be used to homomorphically convert a traditional LWE ciphertext to a PACK-LWE ciphertext. The only difference with the previously defined key switching lies in the definition of the PACK-GLev ciphertexts, we may use as key switching key

$$\overline{\mathrm{ct}}_i \in \mathrm{PACK\text{-}Lev}_{S\prime}^{\mathfrak{B},\mathrm{I}}(0,\ldots,0,s_i,0,\ldots,0) \subset \mathbb{Z}^{\mathrm{I}\cdot(n\prime+w)},$$

$$\underbrace{\phantom{j-1}}_{j-1} \qquad \underbrace{\phantom{w-j}}_{w-j}$$

with $1 \leq j \leq w$, the index where one wants to put the message. The rest of the algorithm is the same. If one wants to fill all the message slots, one can apply the algorithm above for all possible values of $j$ and add the resulting ciphertexts. In the same manner, one can go from an LWE ciphertext to a PACK-GLWE ciphertext or from a GLWE ciphertext to a PACK-GLWE ciphertext, etc. Filling more than one slot can be done using an additional addition, hence the noise will increase. However, addition does not increase the noise much, hence the noise increase is small.

**Hidden permutations**

Hidden permutations can be performed by performing an external product, or a private key switch with specific key switching keys. More specifically to permute slot $i$ and j with $1 \leq i < j \leq$ w of a PACK-GLWE ciphertext encrypting messages $\mu_1, \cdots, \mu_w$, one can permute the slot $i$ and $j$ in the PACK-GLev ciphertexts, taking $m_i = 1, \forall 1 \leq i \leq$ w). As an example, we can use the following auxiliary material to permute the first and the second message:

$$\overline{\overline{\mathrm{CT}}} \in \begin{pmatrix} \mathrm{PACK\text{-}GLev}_{\mathbf{S}}^{\mathfrak{B},\mathrm{I}}\big(-S_{1,1}\cdot m_2, -S_{2,1}\cdot m_1, \cdots, -S_{w,1}\cdot m_w\big) \\ \mathrm{PACK\text{-}GLev}_{\mathbf{S}}^{\mathfrak{B},\mathrm{I}}\big(-S_{1,2}\cdot m_2, -S_{2,2}\cdot m_1, \cdots, -S_{w,2}\cdot m_w\big) \\ \vdots \\ \mathrm{PACK\text{-}GLev}_{\mathbf{S}}^{\mathfrak{B},\mathrm{I}}\big(-S_{1,k}\cdot m_2, -S_{2,k}\cdot m_1, \cdots, -S_{w,k}\cdot m_w\big) \\ \mathrm{PACK\text{-}GLev}_{\mathbf{S}}^{\mathfrak{B},\mathrm{I}}(0, m_1, \cdots, 0) \\ \mathrm{PACK\text{-}GLev}_{\mathbf{S}}^{\mathfrak{B},\mathrm{I}}(m_2, 0, \cdots, 0) \\ \vdots \\ \mathrm{PACK\text{-}GLev}_{\mathbf{S}}^{\mathfrak{B},\mathrm{I}}(0, 0, \cdots, m_w) \end{pmatrix}$$

After the external product, the messages in the resulting PACK-GLWE ciphertext will be the same as the input ciphertext times the messages $m_1, \cdots, m\_\omega$ hidden in $\overline{\overline{\mathrm{CT}}}$ but with a permutation on the slots $i$ and $j$. With the example above, one would get $\mu_2 \cdot m_2, \mu_1 \cdot m_1, \cdots, \mu_w \cdot m_w$ instead of $\mu_1 \cdot m_1, \mu_2 \cdot m_2, \cdots, \mu_w \cdot m_w$ This permutation is hidden in the sense that only the user that created the packed GGSW knows about it. More than 2 slots, can be permuted in one external product by permutating more columns during the PACK-GGSW ciphertext creation. In particular, one can apply any permutation of w

elements. For example, the permutation can be applied in the message correction part, wherein messages are placed in a message slot according to the permutation.

**Hidden linear operations**

Similar to hidden permutations, one can perform a hidden linear operation by performing an external product with a specific packed GGSW. The auxiliary material needed for the hidden linear operation is created by computing a linear equation with hidden permutation GGSW. Using this auxiliary material to perform an external product, the resulting ciphertext will have in one or multiple of its slots have the result of a linear operation performed on the messages of the original slots. For example: If one considers $CT_1 = \mathrm{PACK\text{-}GGSW}_S^{\mathfrak{B},\mathrm{I}}(1,\ldots,1)$ and $CT_2$ is the GGSW defined above to permutate slot 1 and 2 of $CT_1$. Then by setting $CT_{lin\_op} = \alpha CT_1 + \beta CT_2$ and performing the external product of $CT = \mathrm{PACK\text{-}GLWE}_S(m_1, \ldots, m_w)$ with $CT_{lin\_op}$, one gets as result

$$CT_{result} = \mathrm{PACK\text{-}GLWE}_S(\alpha m_1 + \beta m_2, \alpha m_2 + \beta m_1, (\alpha+\beta)m_3, \ldots, (\alpha+\beta)m_w).$$

Embodiments will have an important impact on use cases with substantial input data. The advantages are twofold: they allow use cases to benefit from parallel computation and lead to a compressed data format for the encrypted data. The parallelism offered by embodiments can be used to evaluate the same look-up table on multiple messages or to evaluate different look-up tables on different messages within the same homomorphic operation. Parallel evaluation is

**EP 4 723 540 A1**

advantageous, for example, in homomorphic neural network inference, such as a model to classify medical data, detect fraudulent credit card transactions, predict voting behavior, or create heat maps.

Secondly, the compressing property of embodiments may reduce the memory overhead, as homomorphic encryption leads to significant data expansion, which can be reduced by working in the packed format. Specifically, this compressing property can be particularly useful in applications where encrypted data needs to be stored, such as database applications, e.g., private information retrieval or blockchain applications, or in applications where encrypted data is transferred from one party to another as compression reduces the volume of data transferred.

Furthermore, hidden permutations can be leveraged to provide reassurance that the server is indeed evaluating the requested circuit. By embedding hidden permutations in the circuit and placing control values in one or more specific slots of the input ciphertexts, the user may verify that the result of the computation in the control slots is consistent with expected values. In other words, knowing the circuit and control values, the user can predict part of the output and use this knowledge to ensure the server evaluated the correct circuit.

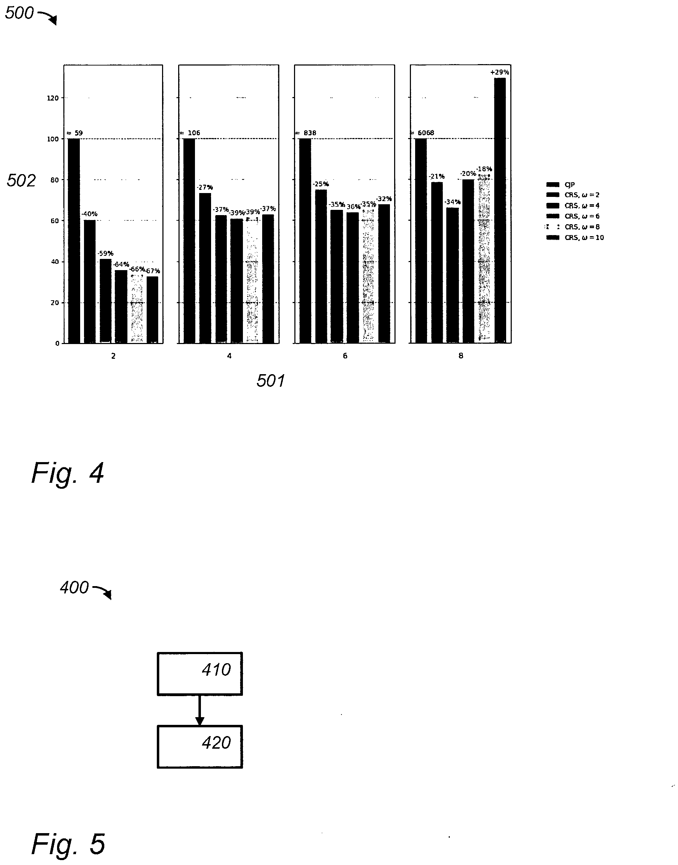

**Figure 4** shows a graph 500 comparing amortized cost of embodiments. At 501 different precisions are indicated in bit, ranging from 2 bit precision to 8 bit precision. At 502 a percentage change (in %) is indicated.

Various embodiments are compared with a traditional implementation described in [CJP21], referred in the figures as 'CJP'. Specifically, we focus on set of operations including: linear operations, keyswitch, and PBS, and we compare the amortized cost of using PACK-LWE ciphertexts with that of using traditional LWE ciphertexts.

As one can see, in terms of amortized costs, best results are obtained for small precision, e.g., precision at most 6 bits. Increasing the number of slots w does not always give the best results for amortized costs.

In an embodiment, the number of slots at least 2, and/or at most 10.

In an embodiment, the number of slots is at least 2, and at most 8, and the precision is at least 2 and at most 8

In an embodiment, the precision is least 2 bits, at most 6 bits, and the number of slots is at least 2.

In an embodiment, the precision is least 2 bits, at most 6 bits, and the number of slots is at least 2 and at most 50.

In an embodiment, the precision is 2 bits, and the number of slots is at least 2.

In an embodiment, the precision is 2 bits, and the number of slots is at least 2 and at most 50.

In an embodiment, the precision is at least 2 bits, at most 6 bits, and the number of slots is between 2 and 8 (inclusive).

In an embodiment, the precision is 8 bits or more, and the number of slots is between 2 and 6 (inclusive).

REFERENCES

The papers below are included herein by reference. In particular, references cited herein for a particular purpose are included in particular for that purpose.

[1] C. Gentry, "Fully homomorphic encryption using ideal lattices," in Proceedings of the 41st annual ACM symposium on theory of computing, STOC 2009, bethesda, MD, USA, may 31 - june 2, 2009, 2009, pp. 169-178. Available: http://doi.acm.org/10.1145/1536414.1536440

[2] I. Chillotti, N. Gama, M. Georgieva, and M. Izabachène, "Faster fully homomorphic encryption: Bootstrapping in less than 0.1 seconds," in Advances in cryptology - ASIACRYPT 2016 - 22nd international conference on the theory and application of cryptology and information security, hanoi, vietnam, december 4-8, 2016, proceedings, part I, 2016, pp. 3-33. Available: https://doi.org/10.1007/978-3-662-53887-6_1

[3] I. Chillotti, N. Gama, M. Georgieva, and M. Izabachène, "Faster packed homomorphic operations and efficient circuit bootstrapping for TFHE," in Advances in cryptology - ASIACRYPT 2017 - 23rd international conference on the theory and applications of cryptology and information security, hong kong, china, december 3-7, 2017, proceedings, part I, 2017, pp. 377-408. Available: https://doi.org/10.1007/978-3-319-70694-8_14

[4] L. Ducas and D. Micciancio, "FHEW: Bootstrapping homomorphic encryption in less than a second," in Advances in cryptology - EUROCRYPT 2015 - 34th annual international conference on the theory and applications of cryptographic techniques, sofia, bulgaria, april 26-30, 2015, proceedings, part I, 2015, pp. 617-640. Available: https://doi.org/10.1007/978-3-662-46800-5_24

[5] C. Gentry, A. Sahai, and B. Waters, "Homomorphic encryption from learning with errors: Conceptually-simpler, asymptotically-faster, attribute-based," IACR Cryptology ePrint Archive, vol. 2013, p. 340, 2013, Available: http://eprint.iacr.org/2013/340

[6] J. H. Cheon, A. Kim, M. Kim, and Y. S. Song, "Homomorphic encryption for arithmetic of approximate numbers," in Advances in cryptology - ASIACRYPT 2017 - 23rd international conference on the theory and applications of cryptology and information security, hong kong, china, december 3-7, 2017, proceedings, part I, 2017, pp. 409-437. Available: https://doi.org/10.1007/978-3-319-70694-8_15

[7] Z. Brakerski, C. Gentry, and V. Vaikuntanathan, "(Leveled) fully homomorphic encryption without bootstrapping," in Innovations in theoretical computer science 2012, cambridge, MA, USA, january 8-10, 2012, 2012, pp. 309-325.

Available: http://doi.acm.org/10.1145/2090236.2090262

[8] J. Fan and F. Vercauteren, "Somewhat practical fully homomorphic encryption," IACR Cryptology ePrint Archive, vol. 2012, p. 144, 2012, Available: http://eprint.iacr.org/2012/144

[9] N. P. Smart and F. Vercauteren, "Fully homomorphic SIMD operations," Des. Codes Cryptography, vol. 71, no. 1, pp. 57-81, 2014, Available: https://doi.org/10.1007/s10623-012-9720-4

[10] I. Damgård and M. Jurik, "A generalisation, a simplification and some applications of paillier's probabilistic public-key system," in Public key cryptography: 4th international workshop on practice and theory in public key cryptosystems, PKC 2001 cheju island, korea, february 13-15, 2001 proceedings 4, Springer, 2001, pp. 119-136.

[11] C. Gentry and S. Halevi, "Compressible FHE with applications to PIR," 2019, pp. 438-464. doi: 10.1007/978-3-030-36033-7_17

[12] C. B. Gentry and S. Halevi, "Compressible (f)HE with applications to PIR" Available: https://patents.google.com/patent/US20200403772A1/en

[13] Z. Brakerski, N. Döttling, S. Garg, and G. Malavolta, "Leveraging linear decryption: Rate-1 fully-homomorphic encryption and time-lock puzzles," in Theory of cryptography conference, Springer, 2019, pp. 407-437.

[14] Z. Liu and Y. Wang, "Amortized functional bootstrapping in less than 7 ms, with o~(1) polynomial multiplications," in International conference on the theory and application of cryptology and information security, Springer, 2023, pp. 101-132.

[15] Z. Liu and Y. Wang, "Relaxed functional bootstrapping: A new perspective on BGV/BFV bootstrapping," Cryptology ePrint Archive, 2024.

[16] F.-H. Liu and H. Wang, "Batch bootstrapping i: A new framework for SIMD bootstrapping in polynomial modulus," in Annual international conference on the theory and applications of cryptographic techniques, Springer-Verlag, 2023. doi: 10.1007/978-3-031-30620-4_11

[17] F.-H. Liu and H. Wang, "Batch bootstrapping II: Bootstrapping in polynomial modulus only requires $\tilde{O}(1)$ FHE multiplications in amortization," in Annual international conference on the theory and applications of cryptographic techniques, Springer-Verlag, 2023. doi: 10.1007/978-3-031-30620-4_12

[18] D. Micciancio and J. Sorrell, "Ring packing and amortized FHEW bootstrapping," Cryptology ePrint Archive, 2018.

[19] A. Guimarães, H. V. Pereira, and B. Van Leeuwen, "Amortized bootstrapping revisited: Simpler, asymptotically-faster, implemented," in International conference on the theory and application of cryptology and information security, Springer, 2023, pp. 3-35.

[20] G. De Micheli, D. Kim, D. Micciancio, and A. Suhl, "Faster amortized FHEW bootstrapping using ring automorphisms," in IACR international conference on public-key cryptography, Springer, 2024, pp. 322-353.

[21] Zama, "TFHE-rs: A Pure Rust Implementation of the TFHE Scheme for Boolean and Integer Arithmetics Over Encrypted Data." 2023. Available: https://github.com/zama-ai/tfhe-rs

[22] C. Bonte, I. Iliashenko, J. Park, H. V. Pereira, and N. P. Smart, "FINAL: Faster FHE instantiated with NTRU and LWE," in International conference on the theory and application of cryptology and information security, Springer, 2022, pp. 188-215.

[23] I. Chillotti, D. Ligier, J.-B. Orfila, and S. Tap, "Improved programmable bootstrapping with larger precision and efficient arithmetic circuits for TFHE," in Advances in cryptology - ASIACRYPT 2021, M. Tibouchi and H. Wang, Eds., Cham: Springer International Publishing, 2021, pp. 670-699.

[24] I. Chillotti, N. Gama, M. Georgieva, and M. Izabachene, "TFHE: Fast fully homomorphic encryption over the torus," J. Cryptol., vol. 33, no. 1, pp. 34-91, 2020, doi: 10.1007/s00145-019-09319-x. Available: https://doi.org/10.1007/s00145-019-09319-x

[25] L. Bergerat et al., "Parameter optimization & larger precision for (t) FHE," Cryptology ePrint Archive, 2022.

[26] M. Joye, "Balanced non-adjacent forms," in Advances in cryptology-ASIACRYPT 2021: 27th international conference on the theory and application of cryptology and information security, singapore, december 6-10, 2021, proceedings, part III 27, Springer, 2021, pp. 553-576.

[27] H. Chen, W. Dai, M. Kim, and Y. Song, "Efficient homomorphic conversion between (ring) LWE ciphertexts," in International conference on applied cryptography and network security, Springer, 2021, pp. 460-479.

[28] Y. Lee et al., "Efficient FHEW bootstrapping with small evaluation keys, and applications to threshold homomorphic encryption." Cryptology ePrint Archive, Paper 2022/198, 2022. doi: doi.org/10.1007/978-3-031-30620-4_8. Available: https://eprint.iacr.org/2022/198

[29] Y. Lee et al., "Efficient FHEW bootstrapping with small evaluation keys, and applications to threshold homomorphic encryption," in Annual international conference on the theory and applications of cryptographic techniques, Springer, 2023, pp. 227-256.

[30] S. Carpov, M. Izabachène, and V. Mollimard, "New techniques for multi-value input homomorphic evaluation and applications," in Cryptographers' track at the RSA conference, Springer, 2019, pp. 106-126.

[31] M. Joye and P. Paillier, "Blind rotation in fully homomorphic encryption with extended keys," in International symposium on cyber security, cryptology, and machine learning, Springer, 2022, pp. 1-18.

[32] T. Zhou, X. Yang, L. Liu, W. Zhang, and N. Li, "Faster bootstrapping with multiple addends," IEEE Access, vol. 6, pp. 49868-49876, 2018.

[33] K. H. Lee and J. W. Yoon, "Discretization error reduction for high precision torus fully homomorphic encryption," in IACR international conference on public-key cryptography, Springer, 2023, pp. 33-62.

[34] A. Guimarães, E. Borin, and D. F. Aranha, "Revisiting the functional bootstrap in TFHE," IACR Trans. Cryptogr. Hardw. Embed. Syst., vol. 2021, no. 2, pp. 229-253, 2021.

[CJP21] Iaria Chillotti, Marc Joye, and Pascal Paillier. Programmable bootstrappingenables efficient homomorphic inference of deep neural networks. In S. Dolev et al., editors, Cyber Security Cryptography and Machine Learning (CSCML2021), volume 12716 ofLecture Notes in Computer Science, pages 1-19. Springer, 2021. doi:10.1007/978-3-030-78086-9_1

[Bra12] Zvika Brakerski. Fully homomorphic encryption without modulus switching from classical gapsvp. In Annual Cryptology Conference, pages 868-886. Springer, 2012

[CGGI20] I. Chillotti, N. Gama, M. Georgieva, and M. Izabachène. TFHE: Fast Fully Homomorphic Encryption over the Torus. In Journal of Cryptology, volume 33, pages 34-91 (2020).

[BPR24] Nicolas Bon, David Pointcheval, and Matthieu Rivain. Optimized Homomorphic Evaluation of Boolean Functions. https://eprint.iacr.org/2023/1589

[BPR12] Banerjee, A., Peikert, C., Rosen, A. (2012). Pseudorandom Functions and Lattices. In: Pointcheval, D., Johansson, T. (eds) Advances in Cryptology - EUROCRYPT 2012. EUROCRYPT 2012. Lecture Notes in Computer Science, vol 7237. Springer, Berlin, Heidelberg. https://doi.org/10.1007/978-3-642-29011-4_42

Figure 5 schematically shows an example of an embodiment of a cryptographic method (500) for homomorphic computation. Method 500 may be computer implemented and comprises

- receiving (410) multiple messages encrypted in a single packed GLWE ciphertext (PACK-GLWE), $((A_1, \cdots, A_k, B_1, \ldots, B_w))$, the packed GLWE ciphertext comprising a mask $(A_1, \cdots, A_k)$ and a body $(B_1, \ldots, B_w)$, the mask comprising multiple values taken from a ring ( $\mathbb{Z}_q = \mathbb{Z}/q\mathbb{Z};\ \Re_{q,N} = \mathbb{Z}_q[X]/(X^N + 1)$ ), the body comprising multiple values taken from the ring, each value in the body being associated with a different secret key and corresponding to a message in the multiple messages, wherein the value in the body is obtained from masking the corresponding message with the mask and the associated secret key, the same mask being used to mask the multiple messages,
- performing (420) a homomorphic operation on the packed GLWE ciphertext, the homomorphic operation operating on the multiple messages at the same time.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 500. Software may only include those steps taken by a particular sub-entity of the system. The software and/or other data according to an embodiment may be stored in a non-transitory storage medium, such as a hard disk, a floppy, a memory, an optical disc, read only memory, random access memory, CD-ROMs, magnetic tape, optical data storage devices, etc. Transitory signals and carrier waves are excluded from non-transitory media.

The software may be sent as a transitory signal along a wire, or wireless, e.g., sent as a transitory signal over a data network, e.g., the Internet. For example, signals and/or carrier waves may serve as a transitory medium for carrying information. For example, a modulated electromagnetic wave may carry a signal bearing the software and/or other data according to an embodiment.

The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

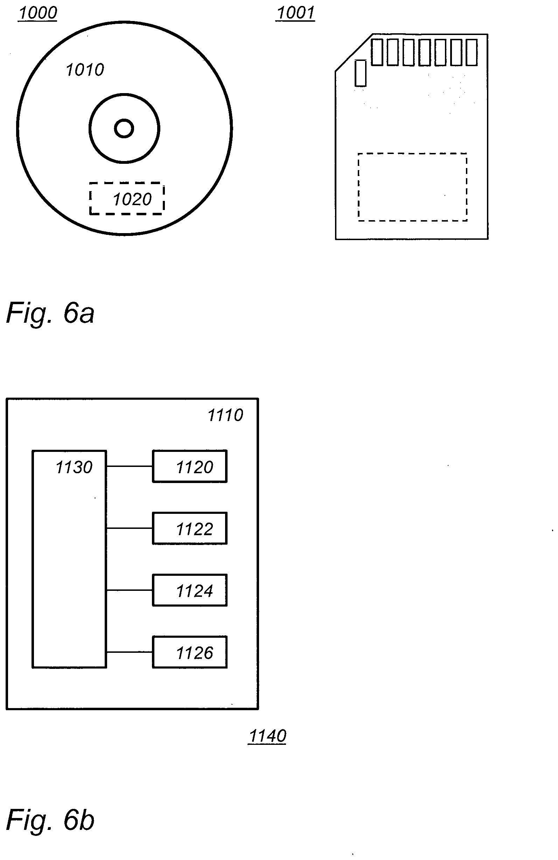

**Figure 6a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a homomorphic computation method, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said homomorphic computation method.

**Figure 6b** shows in a schematic representation of a processor system 1140 according to an embodiment. The processor system comprises one or more integrated circuits 1110. The architecture of the one or more integrated circuits 1110 is schematically shown in Figure 6b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1140 may be arranged for contact and/or contact-less communication, using an antenna and/or connectors, respectively.

For example, in an embodiment, processor system 1140, e.g., the homomorphic computation system may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A cryptographic, computer-implemented method (500) for homomorphic computation, comprising

   - receiving (410) multiple messages encrypted in a single packed GLWE or GLWR ciphertext, $((A_1, \cdots, A_k, B_1, \ldots, B_w))$, the packed GLWE or GLWR ciphertext comprising a mask $(A_1, \cdots, A_k)$ and a body $(B_1, \ldots, B_w)$, the mask comprising multiple values taken from a ring ( $\mathbb{Z}_q = \mathbb{Z}/q\mathbb{Z}; \Re_{q,N} = \mathbb{Z}_q[X]/(X^N + 1)$ ), the body comprising multiple values taken from the ring, each value in the body being associated with a different secret key and corresponding to a message in the multiple messages, wherein the value in the body is obtained from masking the corresponding message with the mask and the associated secret key, the same mask being used to mask the multiple messages,
   - performing (420) a homomorphic operation on the packed GLWE or GLWR ciphertext, the homomorphic operation operating on the multiple messages at the same time.

2. A method for homomorphic computation as in Claim 1, wherein

   - the homomorphic operation comprises a scalar multiple of the packed GLWE or GLWR ciphertext, and/or
   - receiving the packed. ciphertext comprises receiving multiple packed GLWE or GLWR ciphertexts, the homomorphic operation comprising computing a linear combination of the multiple packed GLWE or GLWR ciphertexts.

3. A method for homomorphic computation as in any one of the preceding claims, wherein the ring is $\mathbb{Z}/q\mathbb{Z}$ or $\mathbb{Z}_q[X]/(X^N + 1)$ ), and the homomorphic operation comprises a modulus switch, wherein each of the values in the mask and body are scaled.

4. A method for homomorphic computation as in any one of the preceding claims, wherein a packed GLWE or GLWR ciphertext for multiple messages $m_1,\ldots,m_w$ encrypted under keys $\mathbf{S} = (\mathbf{S}_1, \ldots, \mathbf{S}_w)$ is defined as $(A_1, \cdots, A_k, B_1, \ldots, B_w)$, wherein $B_j = \Sigma A_i \cdot S_{j,i} + m_j + E_j \in \Re_{q,N}$, $\forall 1 \leq j \leq w$, wherein

   $E_j \in \Re_{q,N}$ is a polynomial of noise terms

   $A_i \in \Re_{q,N}$ is a polynomial of the mask

   $S_j \in \Re_{q,N}$ is a polynomial secret key having polynomials $S_{j,i}$ for $1 \leq i \leq k$.

5. A method for homomorphic computation as in any one of the preceding claims, wherein the polynomial degree of the packed GLWE or GLWR ciphertext is 0 ($N = 1$).

6. A method for homomorphic computation as in any one of the preceding claims, wherein the homomorphic operation comprises

   - the evaluation of a lookup table on the multiple messages, or
   - the evaluation of different lookup tables on the multiple messages

7. A method for homomorphic computation as in any one of the preceding claims, wherein the homomorphic operation comprises a reduction of the noise for the multiple messages encrypted in the packed ciphertext.

8. A method for homomorphic computation as in any one of the preceding claims, wherein the homomorphic operation comprises an external product between the packed GLWE or GLWR ciphertext, and a further packed ciphertext.

9. A method for homomorphic computation as in any one of the preceding claims, wherein

   - a packed GLev ciphertext for multiple messages comprises a sequence of packed GLWE or GLWR ciphertexts for the multiple messages divided by powers of a parameter $\mathfrak{B}$ ,

- a packed GGSW ciphertext for multiple messages comprises a sequence of packed GLev ciphertexts for the multiple messages multiplied with a digit of the corresponding secret key, or its negative, followed by a sequence of packed GLev ciphertexts, wherein each packed GLev ciphertext corresponds to one message of the multiple messages in the packed GGSW ciphertext, or to its negative, with the remaining messages in the packed GLev ciphertext set to zero,
- wherein the homomorphic operation comprises an external product between the packed GLWE or GLWR ciphertext and a packed GGSW ciphertext.

10. A method for homomorphic computation as in any one of the preceding claims, wherein

- a packed GLev ciphertext for multiple messages $\overline{CT} \in \text{PACK-GLev}_S^{\mathfrak{B},I}(m_1, \ldots, m_w) \subset \mathfrak{R}_{q,N}^{I \cdot (k+w)}$ is defined as follows

$$\overline{CT} \in \left( \text{PACK-GLWE}_S\left( \frac{m_1 \cdot q}{\mathfrak{B}}, \ldots, \frac{m_w \cdot q}{\mathfrak{B}} \right), \ldots, \text{PACK-GLWE}_S\left( \frac{m_1 \cdot q}{\mathfrak{B}^I}, \ldots, \frac{m_w \cdot q}{\mathfrak{B}^I} \right) \right)$$

- a packed GGSW ciphertext for multiple messages is defined as

$$\overline{\overline{CT}} \in$$

$$\text{PACK-GGSW}_S^{\mathfrak{B},I}(m_1, \cdots, m_w) \subset \mathfrak{R}q, N^{I \cdot (k+w) \times (k+w)}$$

as a collection of packed GLev samples as follows

$$\overline{\overline{CT}} \in \begin{pmatrix} \text{PACK-GLev}_S^{\mathfrak{B},I}\left(-S_{1,1} \cdot m_1, -S_{2,1} \cdot m_2, \cdots, -S_{w,1} \cdot m_w\right) \\ \text{PACK-GLev}_S^{\mathfrak{B},I}\left(-S_{1,2} \cdot m_1, -S_{2,2} \cdot m_2, \cdots, -S_{w,2} \cdot m_w\right) \\ \vdots \\ \text{PACK-GLev}_S^{\mathfrak{B},I}\left(-S_{1,k} \cdot m_1, -S_{2,k} \cdot m_2, \cdots, -S_{w,k} \cdot m_w\right) \\ \text{PACK-GLev}_S^{\mathfrak{B},I}(m_1, 0, \cdots, 0) \\ \text{PACK-GLev}_S^{\mathfrak{B},I}(0, m_2, \cdots, 0) \\ \vdots \\ \text{PACK-GLev}_S^{\mathfrak{B},I}(0, 0, \cdots, m_w) \end{pmatrix}$$

- wherein the homomorphic operation comprises an external product between the packed GLWE or GLWR ciphertext and a packed GGSW ciphertext.

11. A method for homomorphic computation as in Claim 9 or 10, wherein the external product comprises decomposing the packed GLWE or GLWR ciphertext, e.g., a radix decomposition, and computing the dot product of the decomposed packed GLWE or GLWR ciphertext and the packed GGSW ciphertext, obtaining a packed GLWE encryption of the multiplication of the multiple messages encrypted in the packed GLWE or GLWR ciphertext and the corresponding multiple messages in the packed GGSW ciphertext.

12. A method for homomorphic computation as in any one of the preceding claims, wherein the homomorphic operation comprises a packed cmux operation.

13. A method for homomorphic computation as in any one of the preceding claims, wherein the homomorphic operation comprises a packed key switch, taking as input the packed GLWE or GLWR ciphertext and outputting a packed GLWE or GLWR ciphertext, using auxiliary key switching keys, the output packed GLWE or GLWR ciphertext encrypting the same multiple messages as the input packed GLWE or GLWR ciphertext but under a different key as indicated by the auxiliary key switching keys.

14. A method for homomorphic computation as in any one of the preceding claims, wherein the homomorphic operation comprises a homomorphic permutation of the multiple messages encrypted in the packed GLWE or GLWR ciphertext.

15. A method for homomorphic computation as in any one of the preceding claims, wherein the homomorphic operation comprises an external product that homomorphically permutes the multiple messages encrypted in the packed GLWE or GLWR ciphertext.

16. A method for homomorphic computation as in any one of the preceding claims, wherein the homomorphic operation comprises a homomorphic linear operation by computing a linear combination of the messages in a single or multiple packed GLWE or GLWR ciphertexts.

17. A method as in any one of the preceding claims, comprising applying a automorphism to the packed GLWE or GLWR ciphertext by applying the automorphism on every element of the packed GLWE or GLWR ciphertext separately, in particular, wherein a blind rotation is performed using such automorphisms.

18. A system for homomorphic computation comprising: one or more processors; and one or more storage devices storing instructions that, when executed by the one or more processors, cause the one or more processors to perform operations for

- receiving multiple messages encrypted in a single packed GLWE or GLWR ciphertext, $((A_1, \cdots, A_k, B_1, ..., B_w))$, the packed GLWE or GLWR ciphertext comprising a mask $(A_1, \cdots, A_k)$ and a body $(B_1, ..., B_w)$, the mask comprising multiple values taken from a ring ( $\mathbb{Z}_q = \mathbb{Z}/q\mathbb{Z}; \Re_{q,N} = \mathbb{Z}_q[X]/(X^N + 1)$ ), the body comprising multiple values taken from the ring, each value in the body being associated with a different secret key and corresponding to a message in the multiple messages, wherein the value in the body is obtained from masking the corresponding message with the mask and the associated secret key, the same mask being used to mask the multiple messages,
- performing a homomorphic operation on the packed GLWE or GLWR ciphertext, the homomorphic operation operating on the multiple messages at the same time.

19. One or more non-transitory computer-readable media and/or one or more transitory computer-readable media storing computer-executable instructions that, when executed by a computing system, cause the computing system to perform the method according to any one of claims 1-17.

100

110
111
112
113

120
121
122
123

Fig. 1a

102

110.1
120
172
110.2

Fig. 1b

Fig. 2

*Fig. 3*

500

502

501

# Fig. 4

400

410

420

# Fig. 5

_1000_

1010

1020

_1001_

## Fig. 6a

1110

1130

1120

1122

1124

1126

_1140_

## Fig. 6b

# EUROPEAN SEARCH REPORT

**Application Number**

EP 24 31 5451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ILARIA CHILLOTTI ET AL: "Improved Programmable Bootstrapping with Larger Precision and Efficient Arithmetic Circuits for TFHE", IACR, INTERNATIONAL ASSOCIATION FOR CRYPTOLOGIC RESEARCH , vol. 20211124:205936 24 November 2021 (2021-11-24), pages 1-63, XP061069382, Retrieved from the Internet: URL:https://eprint.iacr.org/2021/729.pdf [retrieved on 2021-11-24] | 1-3,5-19 | INV. H04L9/00 H04L9/30 |
| A | * sections 2 and 4.1 * | 4 | |
| A | OREL COSSERON ET AL: "Towards Globally Optimized Hybrid Homomorphic Encryption - Featuring the Elisabeth Stream Cipher", IACR, INTERNATIONAL ASSOCIATION FOR CRYPTOLOGIC RESEARCH , vol. 20220921:140023 21 September 2022 (2022-09-21), pages 1-35, XP061075081, Retrieved from the Internet: URL:https://eprint.iacr.org/archive/2022/180/1663768823.pdf [retrieved on 2022-09-21] * bottom of page 14 * | 1-19 | |

**TECHNICAL FIELDS SEARCHED (IPC)**

H04L

The present search report has been drawn up for all claims

| Place of search | Date of completion of the search | Examiner |
|---|---|---|
| Munich | 16 March 2025 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

**REFERENCES CITED IN THE DESCRIPTION**

**Non-patent literature cited in the description**

- Fully homomorphic encryption using ideal lattices. **C. GENTRY**. Proceedings of the 41st annual ACM symposium on theory of computing. STOC, 31 May 2009, 169-178
- **I. CHILLOTTI** ; **N. GAMA** ; **M. GEORGIEVA** ; **M. IZABACHÈNE**. Faster fully homomorphic encryption: Bootstrapping in less than 0.1 seconds. *Advances in cryptology - ASIACRYPT 2016 - 22nd international conference on the theory and application of cryptology and information security, hanoi, vietnam, december 4-8, 2016, proceedings*, 2016, 3-33, https://doi.org/10.1007/978-3-662-53887-6_1
- **I. CHILLOTTI** ; **N. GAMA** ; **M. GEORGIEVA** ; **M. IZABACHÈNE**. Faster packed homomorphic operations and efficient circuit bootstrapping for TFHE. *Advances in cryptology - ASIACRYPT 2017 - 23rd international conference on the theory and applications of cryptology and information security, hong kong, china, december 3-7, 2017, proceedings*, 2017, 377-408, https://doi.org/10.1007/978-3-319-70694-8_14
- **L. DUCAS** ; **D. MICCIANCIO**. FHEW: Bootstrapping homomorphic encryption in less than a second. *Advances in cryptology - EUROCRYPT 2015 - 34th annual international conference on the theory and applications of cryptographic techniques, sofia, bulgaria, april 26-30, 2015, proceedings*, 617-640, https://doi.org/10.1007/978-3-662-46800-5_24
- **C. GENTRY** ; **A. SAHAI** ; **B. WATERS**. Homomorphic encryption from learning with errors: Conceptually-simpler, asymptotically-faster, attribute-based. *IACR Cryptology ePrint Archive*, 2013, vol. 2013, 340, http://eprint.iacr.org/2013/340
- **J. H. CHEON** ; **A. KIM** ; **M. KIM** ; **Y. S. SONG**. Homomorphic encryption for arithmetic of approximate numbers. *Advances in cryptology - ASIACRYPT 2017 - 23rd international conference on the theory and applications of cryptology and information security, hong kong, china, december 3-7, 2017, proceedings*, 2017, 409-437, https://doi.org/10.1007/978-3-319-70694-8_15
- **Z. BRAKERSKI** ; **C. GENTRY** ; **V. VAIKUNTA-NATHAN**. Leveled) fully homomorphic encryption without bootstrapping. *Innovations in theoretical computer science 2012*, 08 January 2012, vol. 2012, 309-325, http://doi.acm.org/10.1145/2090236.2090262

- **J. FAN** ; **F. VERCAUTEREN**. Somewhat practical fully homomorphic encryption. *IACR Cryptology ePrint Archive*, 2012, vol. 2012, 144, http://eprint.iacr.org/2012/144
- **N. P. SMART** ; **F. VERCAUTEREN**. Fully homomorphic SIMD operations. *Des. Codes Cryptography*, 2014, vol. 71 (1), 57-81, https://doi.org/10.1007/s10623-012-9720-4
- A generalisation, a simplification and some applications of paillier's probabilistic public-key system. **I. DAMGÅRD** ; **M. JURIK**. Public key cryptography: 4th international workshop on practice and theory in public key cryptosystems. Springer, 119-136
- **C. GENTRY** ; **S. HALEVI**. *Compressible FHE with applications to PIR*, 2019, 438-464
- **B. GENTRY** ; **S. HALEVI**. *Compressible (f)HE with applications to PIR*, https://patents.google.com/patent/US20200403772A1/en
- Leveraging linear decryption: Rate-1 fully-homomorphic encryption and time-lock puzzles. **Z. BRAKERSKI** ; **N. DÖTTLING** ; **S. GARG** ; **G. MALAVOLTA**. Theory of cryptography conference. Springer, 2019, 407-437
- Amortized functional bootstrapping in less than 7 ms, with o~(1) polynomial multiplications. **Z. LIU** ; **Y. WANG**. International conference on the theory and application of cryptology and information security. Springer, 2023
- **Z. LIU** ; **Y. WANG**. Relaxed functional bootstrapping: A new perspective on BGV/BFV bootstrapping. *Cryptology ePrint Archive*, 2024
- Batch bootstrapping i: A new framework for SIMD bootstrapping in polynomial modulus. **F.-H. LIU** ; **H. WANG**. Annual international conference on the theory and applications of cryptographic techniques. Springer-Verlag, 2023
- **D. MICCIANCIO** ; **J. SORRELL**. Ring packing and amortized FHEW bootstrapping. *Cryptology ePrint Archive*, 2018
- Amortized bootstrapping revisited: Simpler, asymptotically-faster, implemented. **A. GUIMARÃES** ; **H. V. PEREIRA** ; **B. VAN LEEUWEN**. International conference on the theory and application of cryptology and information security. Springer, 2023, 3-35
- Faster amortized FHEW bootstrapping using ring automorphisms. **G. DE MICHELI** ; **D. KIM** ; **D. MICCIANCIO** ; **A. SUHL**. IACR international conference on public-key cryptography. Springer, 2024, 322-353

- **ZAMA**. *TFHE-rs: A Pure Rust Implementation of the TFHE Scheme for Boolean and Integer Arithmetics Over Encrypted Data*, 2023, https://github.com/zama-ai/tfhe-rs
- FINAL: Faster FHE instantiated with NTRU and LWE. **C. BONTE** ; **I. ILIASHENKO** ; **J. PARK** ; **H. V. PEREIRA** ; **N. P. SMART**. International conference on the theory and application of cryptology and information security. Springer, 2022, 188-215
- Improved programmable bootstrapping with larger precision and efficient arithmetic circuits for TFHE. **I. CHILLOTTI** ; **D. LIGIER** ; **J.-B. ORFILA** ; **S. TAP**. Advances in cryptology - ASIACRYPT 2021. Cham: Springer International Publishing, 2021, 670-699
- **I. CHILLOTTI** ; **N. GAMA** ; **M. GEORGIEVA** ; **M. IZABACHENE**. TFHE: Fast fully homomorphic encryption over the torus. *J. Cryptol.*, 2020, vol. 33 (1), 34-91, https://doi.org/10.1007/s00145-019-09319-x
- **L. BERGERAT et al.** Parameter optimization & larger precision for (t) FHE. *Cryptology ePrint Archive*, 2022
- Balanced non-adjacent forms. **M. JOYE**. Advances in cryptology-ASIACRYPT 2021: 27th international conference on the theory and application of cryptology and information security, singapore, december 6-10, 2021, proceedings. Springer, 2021, vol. 27, 553-576
- Efficient homomorphic conversion between (ring) LWE ciphertexts. **H. CHEN** ; **W. DAI** ; **M. KIM** ; **Y. SONG**. International conference on applied cryptography and network security. Springer, 2021, 460-479
- **Y. LEE et al.** Efficient FHEW bootstrapping with small evaluation keys, and applications to threshold homomorphic encryption.. *Cryptology ePrint Archive*, 2022, https://eprint.iacr.org/2022/198
- Efficient FHEW bootstrapping with small evaluation keys, and applications to threshold homomorphic encryption. **Y. LEE et al.** Annual international conference on the theory and applications of cryptographic techniques. Springer, 2023, 227-256
- New techniques for multi-value input homomorphic evaluation and applications. **S. CARPOV** ; **M. IZABACHÈNE** ; **V. MOLLIMARD**. Cryptographers' track at the RSA conference. Springer, 2019, 106-126
- Blind rotation in fully homomorphic encryption with extended keys. **M. JOYE** ; **P. PAILLIER**. International symposium on cyber security, cryptology, and machine learning. Springer, 2022, 1-18
- **T. ZHOU** ; **X. YANG** ; **L. LIU** ; **W. ZHANG** ; **N. LI**. Faster bootstrapping with multiple addends. *IEEE Access*, 2018, vol. 6, 49868-49876
- Discretization error reduction for high precision torus fully homomorphic encryption. **K. H. LEE** ; **J. W. YOON**. IACR international conference on public-key cryptography. Springer, 2023, 33-62
- **A. GUIMARÃES** ; **E. BORIN** ; **D. F. ARANHA**. Revisiting the functional bootstrap in TFHE. *IACR Trans. Cryptogr. Hardw. Embed. Syst.*, 2021, vol. 2021 (2), 229-253
- Programmable bootstrappingenables efficient homomorphic inference of deep neural networks.. **LARIA CHILLOTTI** ; **MARC JOYE** ; **PASCAL PAILLIER**. Cyber Security Cryptography and Machine Learning (CSCML2021). Springer, 2021, vol. 12716, 1-19
- Fully homomorphic encryption without modulus switching from classical gapsvp.. **ZVIKA BRAKERSKI**. Annual Cryptology Conference. Springer, 2012, 868-886
- **I. CHILLOTTI** ; **N. GAMA** ; **M. GEORGIEVA** ; **M. IZABACHÈNE**. TFHE: Fast Fully Homomorphic Encryption over the Torus.. *Journal of Cryptology*, 2020, vol. 33, 34-91
- **NICOLAS BON** ; **DAVID POINTCHEVAL** ; **MATTHIEU RIVAIN**. *Optimized Homomorphic Evaluation of Boolean Functions*, https://eprint.iacr.org/2023/1589
- Pseudorandom Functions and Lattices. **BANERJEE, A.** ; **PEIKERT, C.** ; **ROSEN, A.** Advances in Cryptology - EUROCRYPT 2012. EUROCRYPT 2012. Lecture Notes in Computer Science. Springer, 2012, vol. 7237